(19) Europäisches Patentamt
European Patent Office
Office européen des brevets

(11) EP 2 297 753 B1

(12) **EUROPÄISCHE PATENTSCHRIFT**

(45) Veröffentlichungstag und Bekanntmachung des Hinweises auf die Patenterteilung:
**30.08.2017 Patentblatt 2017/35**

(21) Anmeldenummer: **09780085.8**

(22) Anmeldetag: **02.07.2009**

(51) Int Cl.:
***H01G 9/00*** *(2006.01)* ***H01G 11/56*** *(2013.01)*
***H01G 11/48*** *(2013.01)* ***H01G 9/028*** *(2006.01)*

(86) Internationale Anmeldenummer:
**PCT/EP2009/058308**

(87) Internationale Veröffentlichungsnummer:
**WO 2010/003874 (14.01.2010 Gazette 2010/02)**

(54) **VERFAHREN ZUR HERSTELLUNG VON FESTELEKTROLYTKONDENSATOREN**

METHOD FOR PRODUCTION OF ELECTROLYTE CAPACITORS

PROCÉDÉ DE PRODUCTION DE CONDENSATEURS ÉLECTROLYTIQUES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **11.07.2008 DE 102008032578**

(43) Veröffentlichungstag der Anmeldung:
**23.03.2011 Patentblatt 2011/12**

(73) Patentinhaber: **Heraeus Deutschland GmbH & Co. KG
63450 Hanau (DE)**

(72) Erfinder:
- **MERKER, Udo
51105 Köln (DE)**
- **WUSSOW, Klaus
57250 Netphen (DE)**

(74) Vertreter: **Herzog, Fiesser & Partner Patentanwälte PartG mbB
Immermannstrasse 40
40210 Düsseldorf (DE)**

(56) Entgegenhaltungen:
**EP-A- 1 713 103**
**EP-A- 1 746 613**
**EP-A1- 1 988 128**
**WO-A-2007/031207**
**WO-A1-2005/034261**
**WO-A1-2005/090434**
**WO-A1-2007/052852**
**JP-A- 2003 229 330**
**US-A1- 2004 254 297**
**US-A1- 2005 124 784**
**US-A1- 2007 069 184**
**US-A1- 2008 086 859**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 297 753 B1

Printed by Jouve, 75001 PARIS (FR)

**Beschreibung**

Die Erfindung betrifft ein Verfahren zur Herstellung von Elektrolytkondensatoren mit niedrigem äquivalenten Serienwiderstand, nach diesem Verfahren hergestellten Elektrolytkondensatoren sowie die Verwendung solcher Elektrolytkondensatoren.

Ein handelsüblicher Feststoffelektrolytkondensator besteht in der Regel aus einer porösen Metallelektrode, einer auf der Metalloberfläche befindlichen Oxidschicht, einem elektrisch leitfähigen Feststoff, der in die poröse Struktur eingebracht wird, einer äußeren Elektrode (Kontaktierung), wie z.B. einer Silberschicht oder einer Metallfolie mit einem Separator, sowie weiteren elektrischen Kontakten und einer Verkapselung.

Beispiele für Feststoffelektrolytkondensatoren sind Tantal-, Aluminium, Niob- und Nioboxidkondensatoren mit Ladungstransferkomplexen, Braunstein- oder Polymer-Feststoffelektrolyten. Die Verwendung poröser Körper hat den Vorteil, dass sich aufgrund der großen Oberfläche eine sehr hohe Kapazitätsdichte, d.h. eine hohe elektrische Kapazität auf kleinem Raum, erzielen lässt.

Besonders geeignet als Feststoffelektrolyte sind aufgrund ihrer hohen elektrischen Leitfähigkeit $\pi$-konjugierte Polymere. $\pi$-konjugierte Polymere werden auch als leitfähige Polymere oder als synthetische Metalle bezeichnet. Sie gewinnen zunehmend an wirtschaftlicher Bedeutung, da Polymere gegenüber Metallen Vorteile bezüglich der Verarbeitbarkeit, des Gewichts und der gezielten Einstellung von Eigenschaften durch chemische Modifikation haben. Beispiele für bekannte $\pi$-konjugierte Polymere sind Polypyrrole, Polythiophene, Polyaniline, Polyacetylene, Polyphenylene und Poly(p-phenylen-vinylene), wobei ein besonders wichtiges und technisch genutztes Polythiophen das Poly-3,4-(ethylen-1,2-dioxy)thiophen, oft auch als Poly(3,4-ethylendioxythiophen) bezeichnet, ist, da es in seiner oxidierten Form eine sehr hohe Leitfähigkeit aufweist.

Die technische Entwicklung in der Elektronik erfordert zunehmend Feststoffelektrolytkondensatoren mit sehr niedrigen Äquivalenten Serienwiderständen (ESR). Grund dafür sind beispielsweise fallende Logikspannungen, eine höhere Integrationsdichte und steigende Taktfrequenzen in integrierten Schaltkreisen. Ferner senkt ein niedriger ESR auch den Energieverbrauch, was besonders für mobile, batteriebetriebene Anwendungen vorteilhaft ist. Es besteht daher der Wunsch, den ESR von Feststoffelektrolytkondensatoren möglichst weit zu reduzieren.

In der europäischen Patentschrift EP-B- 340 512 wird die Herstellung eines Feststoffelektrolyten aus 3,4-Ethylen-1,2-dioxythiophen und die Verwendung seines durch oxidative Polymerisation hergestellten, kationischen Polymeren als Feststoffelektrolyt in Elektrolytkondensatoren beschrieben. Poly(3,4-ethylendioxylhiophen) als Ersatz von Mangandioxid oder von Ladungstransferkomplexen in Feststoffelektrolytkondensatoren senkt aufgrund der höheren elektrischen Leitfähigkeit den äquivalenten Serienwiderstand des Kondensators und verbessert das Frequenzverhalten.

Nachteilig an diesem und ähnlichen Verfahren ist, dass das leitfähige Polymer durch Polymerisation in-situ im Elektrolytkondensator erzeugt wird. Dazu müssen das Monomer, wie z.B. 3,4-Ethylen-1,2-dioxythiophen, und Oxidationsmittel in Gegenwart von Lösungsmitteln zusammen oder nacheinander in den porösen Metallkörper eingebracht und anschließend polymerisiert werden. Eine solche chemische Reaktion ist bei der Herstellung elektronischer Bauteile aber unerwünscht, da es sehr schwierig ist, die chemische Reaktion in Millionen von kleinen porösen Bauteilen immer identisch ablaufen zu lassen, um Kondensatoren gleicher Spezifikation herzustellen.

Weiterhin nachteilig an in-situ Polymerisationen bei der Herstellung von Feststoffelektrolyten für Kondensatoren ist, dass die Oxidationsmittel das Dielektrikum (Oxidschicht) auf der Metallelektrode schädigen können. Als Oxidationsmittel werden in der Regel Übergangsmetallsalze, wie z.B. Fe(III)-Salze, verwendet. Als Reaktionsprodukte der Polymerisation verbleiben nach der Polymerisation dann nicht nur das elektrisch leitfähige Polymer, sondern auch die reduzierten Metallsalze, wie z.B. Fe(II)-Salze im Elektrodenkörper, zurück. Durch anschließende Waschschritte kann zwar versucht werden, diese Salze zu entfernen. Dies ist jedoch aufwendig und gelingt nicht vollständig, d.h. es verbleiben immer Reste der Metallsalze im Elektrodenkörper zurück. Bekanntlich können insbesondere Übergangsmetalle das Dielektrikum schädigen, so dass die hieraus resultierenden erhöhten Restströme die Lebensdauer der Kondensatoren deutlich reduzieren oder gar einen Einsatz der Kondensatoren unter harschen Bedingungen, wie hohen Temperaturen und/oder hoher Luftfeuchte, unmöglich machen.

Darüber hinaus ist der Herstellungsprozess von Feststoffelektrolytkondensatoren bei Anwendung einer in-situ Polymerisation sehr aufwendig: Ein Polymerisationsprozess (Tränkung, Polymerisation, Waschung) dauert in der Regel mehrere Stunden, unter Umständen müssen hierbei explosionsgefährliche oder toxische Lösungsmittel eingesetzt werden und es bedarf sehr vieler Polymerisationsprozesse, um einen Feststoffelektrolyten herzustellen.

Eine Polymerisation von Monomeren kann auch in Abwesenheit von Oxidationsmitteln elektrochemisch erfolgen. Die elektrochemische Polymerisation erfordert jedoch, dass zunächst ein leitfähiger Film auf der isolierenden Oxidschicht der Metallelektrode abgeschieden wird. Dazu bedarf es dann wiederum einer in-situ Polymerisation mit allen oben aufgeführten Nachteilen. Schließlich muss diese Schicht dann für jede einzelne Metallelektrode elektrisch kontaktiert werden. Diese Kontaktierung ist in der Massenfertigung sehr aufwendig und kann die Oxidschicht beschädigen. Darüber hinaus ist die elektrochemische Abscheidung in den Poren der porösen Metallelektrode sehr schwierig, da die Abscheidung aufgrund des elektrischen Potentialverlaufs primär an den Außenseiten des Elektrodenkörpers

stattfindet.

In der japanischen Patentanmeldung JP2006287182 werden Polymerlösungen auf einen pH-Wert von 5.4 bis 8.1 eingestellt, um das Dielektrikum des Elektrolytkondensators nicht zu korrodieren und damit den ESR zu erniedrigen. Die Verwendung von Polymerlösungen mit einem pH-Wert von 1.2 bis 1.6 zur Herstellung von Feststoffelektrolytkondensatoren führt zu sehr hohen ESR Werten.

In der PCT Anmeldung WO-A1-2007/031206 wird der Feststoffelektrolyt eines Elektrolytkondensators mittels einer Dispersion enthaltend Teilchen aus Poly(3,4-ethylendioxythiophen)/Polystyrolsulfonat mit einem mittleren Durchmesser von 1-100 nm hergestellt. Für korrosionsempfindliche Dielektrika, wie Aluminiumoxid, werden Dispersionen mit einem pH-Wert von 6 eingesetzt, um das Dielektrikum nicht zu schädigen. Dieses Verfahren überwindet zwar die oben beschriebenen Nachteile der in-situ Polymerisation, es besteht jedoch Bedarf den ESR weiter zu reduzieren.

Es bestand somit Bedarf, ein Verfahren zu Verfügung zu stellen, mit dem sich der ESR von Feststoffelektrolyt-Kondensatoren ohne in-situ Polymerisation weiter senken lässt.

Die Aufgabe bestand daher darin, ein solches Verfahren und die damit verbesserten Kondensatoren bereitzustellen.

Überraschend wurde nun gefunden, dass sich mittels Dispersionen, die elektrisch leitfähige Polymere enthalten und deren pH-Wert größer gleich 1.8 und kleiner gleich 3.9 ist, Feststoffelektrolyte für Kondensatoren herstellen lassen, die einen deutlich niedrigeren ESR besitzen.

Ein pH-Wert größer gleich 1.8 und kleiner gleich 3.9 hat überraschenderweise einen sehr positiven Einfluss auf den ESR des Feststoffelektrolyten. Dies ist insbesondere daher überraschend, da nach bisherigen Erkenntnissen, insbesondere bei korrosionsempfindlichen Dielektrika wie Aluminiumoxid, das Dielektrikum bei solchen pH-Werten angegriffen und der ESR erhöht wird.

EP 1 746 613 A und EP 1 713 103 A offenbaren ein Verfahren zur Herstellung eines Feststoffelektrolytkondensators, bei dem auf einen Kondensatorkörper, der wenigstens einen porösen Elektrodenkörper eines Elektrodenmaterials, ein Dielektrikum, das die Oberfläche dieses Elektrodenmaterials bedeckt und einen Feststoffelektrolyten wenigstens enthaltend ein elektrisch leitfähiges Material, der die Dielektrikumsoberfläche ganz oder teilweise bedeckt, umfasst, eine Dispersion beinhaltend Teilchen eines leitfähigen Polymers aufgebracht wird, wobei diese Dispersion durch eine besondere Partikelgrößenverteilung gekennzeichnet ist.

JP 2003-229330 A offenbart einen Feststoffelektrolytkondensator, der eine zweischichtige Feststoffelektrolytschicht umfasst, wobei die beiden Feststoffelektrolytschichten durch *in situ*-Polymerisation mittels Thiophen-Monomerlösungen Lösungen hergestellt werden, die sich in ihrem pH-Wert unterscheiden.

EP 1 988 128 A1 offenbart einen Kondensator bestehend aus einer Anode aus einem Ventilmetall, einer Dielektrikumsschicht und einer darauf aufgebrachten Feststoffelektrolytschicht, wobei die Feststoffelektrolytschicht ein $\pi$-konjugiertes leitfähiges Polymer, ein Polyanion und eine Amid-Verbindung umfasst.

WO 2005/034261 A1 offenbart ein Verfahren zur Haltbarmachung eines organischen Polymermaterials, wobei ein stark saures organisches Polymermaterial in einer im Wesentlichen aus Wasser bestehenden Flüssigkeit gelöst oder dispergiert wird. Das Verfahren ist dadurch gekennzeichnet, dass der pH-Wert einer 2 gew.-%igen Lösung oder Dispersion dieses organischen Polymermaterials bestimmt und anschließend erhöht wird.

US 2005/124784 A1 offenbart eine Zusammensetzung umfassend ein substituiertes Polymer umfassend substituierte Thieno[3,4-b]thiophen-Monomereinheiten, welche durch elektrophile Substitution eines Thieno[3,4-b]thiophen-Monomereinheiten aufweisenden ersten Polymers hergestellt worden sind, wobei die elektrophile Substitution eine Sulfonierung, eine Nitrierung, eine Halogenierung oder eine Kombination dieser Reaktionen ist.

WO 2005/090434 A1 offenbart eine wässrige Dispersion umfassend Wasser, ein Polydioxythiophen, eine kolloidformende polymere Säure und eine mit Wasser mischbare organische Flüssigkeit, wobei das Gewichtsverhältnis der organischen Flüssigkeit zur Gesamtmenge an Polymer mindestens 0,1 beträgt.

US 2008/086859 A1 offenbart ein Verfahren zur Herstellung eines Feststoff-elektrolytkondensators umfassend die Verfahrensschritte der Herstellung einer Dielektrikumsschicht auf der Oberfläche ein eines Anodenelementes aus einem Ventilmetall, die Herstellung einer Kathodenschicht beinhaltend ein elektrisch leitfähiges Polymer auf der Dielektrikumsschicht und die Anpassung des pH-Wertes einer Lösung beinhaltend ein Monomer und ein Dotierungsmittel, welche zur Herstellung der Schicht des elektrisch leitfähigen Polymers eingesetzt wird.

WO 2007/052852 A1 offenbart ein Verfahren zur Herstellung einer organischen Dispersion eines intrinsisch leitfähigen Polymers, umfassend einen Entionisierungsschritt, bei dem eine wässrige kolloidale Dispersion eines intrinsisch leitfähigen Polymers entionisiert wird, einen Lösemittel-Austauschschritt, bei dem Wasser gegen ein von N-Methylpyrrolidon und DMSO verschiedenes organisches Lösemittel ausgetauscht wird, und einen Additiv-Behandlungsschritt, bei dem N-Methylpyrrolidon oder DMSO der nach dem Lösemittel-Austausch erhaltenen Dispersion zugesetzt werden.

US 2004/254297 A1 offenbart eine wässrige Dispersion eines Polythiophenes und einer kolloidformenden polymeren Säure. US 2007/069184 A1 offenbart eine PolymerZusammensetzung umfassend mindestens ein dotiertes elektrisch leitfähiges Polymer, welches mit mindestens einem fluorinierten sauren Polymer vermischt ist. Gegenstand

der vorliegenden Erfindung ist daher ein Verfahren zur Herstellung eines Elektrolytkondensators, wenigstens umfassend, dass

a) auf einen porösen Körper, wenigstens umfassend einen porösen Elektrodenkörper (2) eines Elektrodenmaterials und ein Dielektrikum (3), das die Oberfläche dieses Elektrodenmaterials bedeckt,
eine Dispersion A) aufgebracht wird,
die wenigstens Teilchen B) eines elektrisch leitfähigen Polymers und ein Dispersionsmittel D) enthält,

b) und zur Bildung eines Feststoffelektrolyten (4), der die Dielektrikumsoberfläche ganz oder teilweise bedeckt, das Dispersionmittel D) wenigstens teilweise entfernt wird,

dadurch gekennzeichnet, dass der pH-Wert der Dispersion A) gemessen bei 25°C größer gleich 1.8 und kleiner gleich 3.9.

Bevorzugt ist der pH-Wert der Dispersion A) größer gleich 2 und kleiner gleich 3.5, besonders bevorzugt größer gleich 2 und kleiner gleich 3, überaus bevorzugt größer gleich 2 und kleiner gleich 2,8, wobei der pH-Wert bei 25°C gemessen wird.

Zur Einstellung des pH-Werts können den Dispersionen beispielsweise Basen oder Säuren zugesetzt werden. Als Basen können anorganische Basen, wie z.B. Natriumhydroxid, Kaliumhydroxid, Kalziumhydroxid oder Ammoniak, oder organische Basen, wie z.B. Ethylamin, Diethylamin, Triethylamin, Propylamin, Dipropylamin, Tripropylamin, Isopropylamin, Diisopropylamin, Butylamin, Dibutylamin, Tributylamin, Isobutylamin, Diisobutylamin, Triisobutylamin, 1-Methylpropylamin, Methylethylamin, Bis(1-methyl)propylamin, 1,1-Dimethylethylamin, Pentylamin, Dipentylamin, Tripentylamin, 2-Pentylamin, 3-Pentylamin, 2-Methylbutylamin, 3-Methylbutylamin, Bis(3-methylbutylamin), Tris(3-methylbutylamin), Hexylamin, Octylamin, 2-Ethylhexylamin, Decylamin, N-Methylbutylamin, N-Ethylbutylamin, N,N-Dimethylethylamin, N,N-Dimethylpropyl, N-Ethyldiisopropylamin, Allylamin, Dialkylamin, Ethanolamin, Diethanolamin, Triethanolamin, Methylethanolamin, Methyldiethanolamin, Dimethylethanolamin, Diethylethanolamin, N-Butylethanolamin, N-Butyldiethanolamin, Dibutylethanolamin, Cyclohexylethanolamin, Cyclohexyldiethanolamin, N-Ethylathanolamin, N-Propylethanolamin, Tert-Butylethanolamin Tert-Butyldiethanolamin, Propanolamin, Dipropanolamin, Tripropanolamin oder Benzylamin eingesetzt werden. Als Säuren können anorganische Säuren, wie z.B. Schwefelsäure, Phosphorsäure oder Salpetersäure, oder organische Säuren, wie z.B. Carbon- oder Sulfonsäuren, eingesetzt werden. Bevorzugt sind solche Zusätze, die die Filmbildung der Dispersionen nicht beeinträchtigen und bei höheren Temperaturen, z.B. Löttemperaturen, im Feststoffelektrolyten verbleiben, wie z.B. die Basen Dimethylethanolamin, Diethanolamin, Ammoniak oder Triethanolamin und die Säure Polystyrolsulfonsäure.

Die Teilchen B) der Dispersion A) haben im trockenen Zustand eine spezifische elektrische Leitfähigkeit von größer als 100 S/cm.

Die spezifische elektrische Leitfähigkeit der Teilchen B) im trockenen Zustand ist dabei die spezifische elektrische Leitfähigkeit des Films im trockenen Zustand, der sich beim Trocknen der Dispersion A) aus den Teilchen B) bildet.

Bevorzugt werden Dispersionen A) eingesetzt, deren Teilchen B) im getrockneten Zustand eine spezifische elektrische Leitfähigkeit von größer 150 S/cm, besonders bevorzugt größer 200 S/cm, ganz besonders bevorzugt größer 250 S/cm, überaus bevorzugt größer 300 S/cm und in einer besonders bevorzugten Ausführungsform größer 400 S/cm aufweisen.

Die Viskosität der Dispersion A) kann je nach Aufbringungsart zwischen 0,1 und 1000 mPa·s (gemessen mit einem Rheometer bei 20°C und einer Scherrate von 100 $s^{-1}$) betragen. Bevorzugt beträgt die Viskosität 0,1 bis 500 mPa·s, besonders bevorzugt zwischen 1 bis 200 mPa·s, ganz besonders bevorzugt 1 bis 100 mPa·s und überaus bevorzugt 1 bis 50 mPas.

Der Feststoffgehalt der Dispersion A) beträgt 0,1 - 90 Gewichtsprozent (Gew.-%), bevorzugt 0,1 - 30 Gew.-% , ganz besonders bevorzugt 0.3 - 10 Gew.-% und überaus bevorzugt 0.5 - 5% Gew.-%.

Der Feststoffgehalt wird bestimmt über Trocknung des Dispersion A) bei einer Temperatur, die hinreichend hoch ist, um das Dispersionsmittel zu entfernen, dabei jedoch nicht den Feststoff zersetzt.

Die Teilchen B) des leitfähigen Polymers in der Dispersion A) haben in dem Verfahren einen mittleren Durchmesser von 1 bis 100 nm, bevorzugt einen mittleren Durchmesser von 1 bis 80 nm, besonders bevorzugt von 1 bis 50 nm und ganz besonders bevorzugt von 5 bis 40 nm.

Die Bestimmung des Durchmessers der Teilchen B) erfolgt über eine Ultrazentrifugenmessung. Das allgemeine Vorgehen ist in Colloid Polym. Sci. 267, 1113-1116 (1989) beschrieben. Bei Teilchen B), die in der Dispersion quellen, wird die Teilchengröße im gequollenen Zustand bestimmt. Eine Durchmesserverteilung der Teilchen B) bezieht sich auf eine Massenverteilung der Teilchen in der Dispersion in Abhängigkeit vom Teilchendurchmesser.

Die Teilchen B) des leitfähigen Polymers in der Dispersion A) haben in dem Verfahren bevorzugt einen $d_{90}$ Wert der Durchmesserverteilung von kleiner 150 nm, besonders bevorzugt kleiner 100 nm, ganz besonders bevorzugt kleiner 80 nm und überaus bevorzugt kleiner 50 nm.

Die Teilchen B) des leitfähigen Polymers in der Dispersion A) haben in dem Verfahren bevorzugt einen $d_{10}$

Wert der Durchmesserverteilung größer 1 nm, besonders bevorzugt größer 3 nm, ganz besonders bevorzugt größer 5nm.

Der $d_{10}$ Wert der Durchmesserverteilung besagt dabei, dass 10% der Gesamtmasse aller Teilchen B) des leitfähigen Polymers in der Dispersion A) solchen Teilchen B) zugeordnet werden kann, die einen Durchmesser kleiner oder gleich dem $d_{10}$ Wert besitzen. Der $d_{90}$ Wert der Durchmesserverteilung besagt, dass 90% der Gesamtmasse aller Teilchen B) des leitfähigen Polymers in der Dispersion A) solchen Teilchen B) zugeordnet werden kann, die einen Durchmesser kleiner oder gleich dem $d_{90}$ Wert besitzen.

Die Dispersion A) enthält bevorzugt keine oder nur geringe Mengen an Metallen und Übergangsmetallen. Unter Metallen werden hier Metalle oder Metallionen von Haupt- oder Nebengruppenmetallen, letztere im Folgenden auch als Übergangsmetalle bezeichnet, des Periodensystems der Elemente verstanden. Bekanntlich können insbesondere Übergangsmetalle das Dielektrikum schädigen, so dass die hieraus resultierenden erhöhten Restströme die Lebensdauer der Kondensatoren deutlich reduzieren oder gar einen Einsatz der Kondensatoren unter harschen Bedingungen, wie hohen Temperaturen und/oder hoher Luftfeuchte, unmöglich machen.

Die Dispersion A) hat in dem Verfahren bevorzugt einen Gehalt an Metallen kleiner 5000 mg/kg, besonders bevorzugt kleiner 1000 mg/kg, ganz besonders bevorzugt kleiner 200 mg/kg. Als Metalle sind hier beispielsweise Na, K, Mg, Al, Ca, Fe, Cr, Mn, Co, Ni, Cu, Ru, Ce oder Zn genannt.

Die Dispersion A) hat in dem Verfahren bevorzugt einen Gehalt an Übergangsmetallen kleiner 1000 mg/kg, besonders bevorzugt kleiner 100 mg/kg, ganz besonders bevorzugt kleiner 20 mg/kg. Als Übergangsmetalle sind hier beispielsweise Fe, Cu, Cr, Mn, Ni, Ru, Ce, Zn oder Co genannt.

Die Dispersion A) hat in dem Verfahren bevorzugt einen Eisengehalt kleiner 1000 mg/kg, besonders bevorzugt kleiner 100 mg/kg, ganz besonders bevorzugt kleiner 20 mg/kg.

Die niedrigen Konzentrationen an Metallen in den Dispersionen haben den großen Vorteil, dass das Dielektrikum bei Bildung des Feststoffelektrolyten und im späteren Betrieb des Kondensators nicht geschädigt wird.

Das Elektrodenmaterial bildet im Elektrolytkondensator hergestellt nach dem erfindungsgemäßen Verfahren einen porösen Körper mit großer Oberfläche, und liegt z.B. in Form eines porösen Sinterkörpers oder einer aufgerauten Folie vor. Im Folgenden wird dieser poröse Körper auch kurz als Elektrodenkörper bezeichnet.

Der mit einem Dielektrikum bedeckte Elektrodenkörper wird im Folgenden auch kurz als oxidierter Elektrodenkörper bezeichnet. Die Bezeichnung "oxidierter Elektrodenkörper" umfasst auch solche Elektrodenkörper, die mit einem Dielektrikum bedeckt sind, das nicht durch Oxidation des Elektrodenkörpers hergestellt wurde.

Der mit einem Dielektrikum sowie ganz oder teilweise mit einem Feststoffelektrolyten bedeckte Elektrodenkörper wird im Folgenden auch kurz als Kondensatorkörper bezeichnet.

Unter äußerer Oberfläche des Kondensatorkörpers werden die Außenflächen des Kondensatorkörpers verstanden.

Der Begriff Polymere umfasst im Sinne der Erfindung alle Verbindungen mit mehr als einer gleichen oder unterschiedlichen Wiederholungseinheit.

Unter leitfähigen Polymeren wird hier insbesondere die Verbindungsklasse der $\pi$-konjugierten Polymere verstanden, die nach Oxidation oder Reduktion eine elektrische Leitfähigkeit besitzen. Bevorzugt werden solche $\pi$-konjugierten Polymere unter leitfähigen Polymeren verstanden, die nach der Oxidation eine elektrische Leitfähigkeit in der Größenordnung von mindestens $1 \mu S\ cm^{-1}$ besitzen.

Die Teilchen B) des elektrisch leitfähigen Polymers in der Dispersion A) enthalten bevorzugt wenigstens ein Polythiophen, Polypyrrol oder Polyanilin, die gegebenenfalls substituiert sind.

Bevorzugt enthalten die Teilchen B) des elektrisch leitfähigen Polymers in der Dispersion A) wenigstens ein Polythiophen mit wiederkehrenden Einheiten der allgemeinen Formel (I) oder der allgemeinen Formel (II) oder der allgemeinen Formel (X) oder wiederkehrenden Einheiten der Formeln (I) und (II) oder wiederkehrenden Einheiten der Formeln (I) und (X) oder wiederkehrenden Einheiten der Formeln (II) und (X) oder wiederkehrenden Einheiten der Formeln (I), (II) und (X)

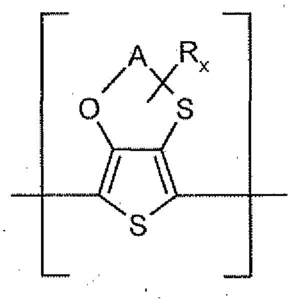

(I),

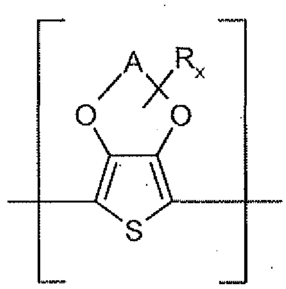

(II),

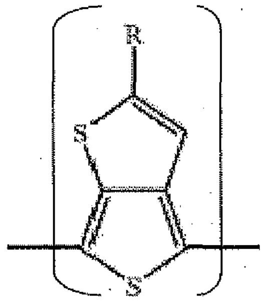

(X)

worin

A für einen gegebenenfalls substituierten $C_1$-$C_5$-Alkylenrest steht,

R unabhängig voneinander für H, einen linearen oder verzweigten, gegebenenfalls substituierten $C_1$-$C_{18}$-Alkylrest, einen gegebenenfalls substituierten $C_5$-$C_{12}$-Cycloalkylrest, einen gegebenenfalls substituierten $C_6$-$C_{14}$-Arylrest, einen gegebenenfalls substituierten $C_7$-$C_{18}$-Aralkylrest, einen gegebenenfalls substituierten $C_1$-$C_4$-Hydroxyalkylrest oder einen Hydroxylrest steht,

x für eine ganze Zahl von 0 bis 8 steht und

für den Fall, dass mehrere Reste R an A gebunden sind, diese gleich oder unterschiedlich sein können.

Die allgemeinen Formeln (I) und (II) sind so zu verstehen, dass x Substituenten R an den Alkylenrest A gebunden sein können.

Besonders bevorzugt sind Polythiophene mit wiederkehrenden Einheiten der allgemeinen Formel (I) oder (II) oder wiederkehrenden Einheiten der allgemeinen Formel (I) und (II), worin A für einen gegebenenfalls substituierten $C_2$-$C_3$-Alkylenrest und x für 0 oder 1 steht.

Ganz besonders bevorzugt als leitfähiges Polythiophen der Teilchen B) ist Poly(3,4-ethylendioxythiophen), das gegebenenfalls substituiert ist.

Unter dem Präfix Poly- ist im Rahmen der Erfindung zu verstehen, dass mehr als eine gleiche oder verschiedene wiederkehrende Einheit im Polymeren bzw. Polythiophen enthalten ist. Die Polythiophene enthalten insgesamt n wiederkehrende Einheiten der allgemeinen Formel (I) oder der allgemeinen Formel (II) oder der allgemeinen Formel (X) oder der allgemeinen Formeln (I) und (II) oder der allgemeinen Formeln (I) und (X) oder der allgemeinen Formeln (II) und (X) oder der allgemeinen Formeln (I), (II) und (X), wobei n eine ganze Zahl von 2 bis 2000, bevorzugt 2 bis 100, ist. Die wiederkehrenden Einheiten der allgemeinen Formel (I) oder der allgemeinen Formel (II) oder der allgemeinen Formel (X) oder die wiederkehrenden Einheiten der allgemeinen Formeln (I) und (II) oder die wiederkehrenden Einheiten der allgemeinen Formeln (I) und (X) oder die wiederkehrenden Einheiten der allgemeinen Formeln (II) und (X) oder die wiederkehrenden Einheiten der allgemeinen Formeln (I), (II) und (X) können innerhalb eines Polythiophens jeweils gleich oder verschieden sein. Bevorzugt sind Polythiophene mit jeweils gleichen wiederkehrenden Einheiten der allgemeinen Formel (I) oder der allgemeinen Formel (II) oder der allgemeinen Formel (X) oder mit jeweils gleichen wiederkehrenden Einheiten der allgemeinen Formeln (I) und (II), oder der allgemeinen Formeln (I) und (X), oder der allgemeinen Formeln (II) und (X), oder mit jeweils gleichen wiederkehrenden Einheiten der allgemeinen Formeln (I), (II) und (X). Besonders bevorzugt sind Polythiophene mit jeweils gleichen wiederkehrenden Einheiten der allgemeinen Formel (I) oder der allgemeinen Formel (II) oder mit jeweils gleichen wiederkehrenden Einheiten der allgemeinen Formeln (I) und (II).

An den Endgruppen tragen die Polythiophene bevorzugt jeweils H.

$C_1$-$C_5$-Alkylenreste A sind im Rahmen der Erfindung bevorzugt Methylen, Ethylen, n-Propylen, n-Butylen oder n-Pentylen. $C_1$-$C_{18}$-Alkyl R stehen bevorzugt für lineare oder verzweigte $C_1$-$C_{18}$-Alkylreste wie Methyl, Ethyl, n- oder iso-Propyl, n-, iso-, sec- oder tert-Butyl, n-Pentyl, 1-Methylbutyl, 2-Methylbutyl, 3-Methylbutyl, 1-Ethylpropyl, 1,1-Dimethylpropyl, 1,2-Dimethylpropyl, 2,2-Dimethylpropyl, n-Hexyl, n-Heptyl, n-Octyl, 2-Ethylhexyl, n-Nonyl, n-Decyl, n-Undecyl, n-Dodecyl, n-Tridecyl, n-Tetradecyl, n-Hexadecyl oder n-Octadecyl, $C_5$-$C_{12}$-Cycloalkylreste R stehen beispielsweise für Cyclopentyl, Cyclohexyl, Cycloheptyl, Cyclooctyl, Cyclononyl oder Cyclodecyl, $C_6$-$C_{14}$-Arylreste R stehen beispielsweise für Phenyl oder Naphthyl, und $C_7$-$C_{18}$-Aralkylreste R beispielsweise für Benzyl, o-, m-, p-Tolyl, 2,3-, 2,4-, 2,5-, 2,6-, 3,4-, 3,5-Xylyl oder Mesityl. Die vorangehende Aufzählung dient der beispielhaften Erläuterung der Erfindung und ist nicht als abschließend zu betrachten.

Als gegebenenfalls weitere Substituenten der Reste A und/oder der Reste R kommen im Rahmen der Erfindung zahlreiche organische Gruppen in Frage, beispielsweise Alkyl-, Cycloalkyl-, Aryl-, Aralkyl-, Alkoxy, Halogen-, Ether-,

Thioether-, Disulfid-, Sulfoxid-, Sulfon-, Sulfonat-, Amino-, Aldehyd-, Keto-, Carbonsäureester-, Carbonsäure-, Carbonat-, Carboxylat-, Cyano-, Alkylsilan- und Alkoxysilangruppen sowie Carboxylamidgruppen.

Der Rahmen der Erfindung umfasst alle oben stehenden und im Folgenden aufgeführten, allgemeinen oder in Vorzugsbereichen genannten Restedefinitionen, Parameter und Erläuterungen untereinander, also auch zwischen den jeweiligen Bereichen und Vorzugsbereichen in beliebiger Kombination.

Die als Feststoffelektrolyt in dem bevorzugten Verfahren eingesetzten Polythiophene können neutral oder kationisch sein. In bevorzugten Ausführungsformen sind sie kationisch, wobei sich "kationisch" nur auf die Ladungen bezieht, die auf der Polythiophenhauptkette sitzen. Je nach Substituent an den Resten R können die Polythiophene positive und negative Ladungen in der Struktureinheit tragen, wobei sich die positiven Ladungen auf der Polythiophenhauptkette und die negativen Ladungen gegebenenfalls an den durch Sulfonat- oder Carboxylatgruppen substituierten Resten R befinden. Dabei können die positiven Ladungen der Polythiophenhauptkette zum Teil oder vollständig durch die gegebenenfalls vorhandenen anionischen Gruppen an den Resten R abgesättigt werden. Insgesamt betrachtet können die Polythiophene in diesen Fällen kationisch, neutral oder sogar anionisch sein. Dennoch werden sie im Rahmen der Erfindung alle als kationische Polythiophene betrachtet, da die positiven Ladungen auf der Polythiophenhauptkette maßgeblich sind. Die positiven Ladungen sind in den Formeln nicht dargestellt, da ihre genaue Zahl und Position nicht einwandfrei feststellbar sind. Die Anzahl der positiven Ladungen beträgt jedoch mindestens 1 und höchstens n, wobei n die Gesamtanzahl aller wiederkehrenden Einheiten (gleicher oder unterschiedlicher) innerhalb des Polythiophens ist.

Zur Kompensation der positiven Ladung, soweit dies nicht bereits durch die gegebenenfalls Sulfonat- oder Carboxylat-substituierten und somit negativ geladenen Reste R erfolgt, benötigen die kationischen Polythiophene Anionen als Gegenionen.

Gegenionen können monomere oder polymere Anionen, letztere im Folgenden auch als Polyanionen bezeichnet, sein.

Polymere Anionen sind gegenüber monomeren Anionen bevorzugt, da sie zur Filmbildung beitragen und aufgrund ihrer Größe zu thermisch stabileren elektrisch leitfähigen Filmen führen.

Polymere Anionen können hier beispielsweise Anionen polymerer Carbonsäuren, wie Polyacrylsäuren, Polymethacrylsäure oder Polymaleinsäuren, oder polymerer Sulfonsäuren, wie Polystyrolsulfonsäuren und Polyvinylsulfonsäuren. Diese Polycarbon- und -sulfonsäuren können auch Copolymere von Vinylcarbon- und Vinylsulfonsäuren mit anderen polymerisierbaren Monomeren, wie Acrylsäureestern und Styrol, sein.

Bevorzugt ist in den genannten Teilchen B) als polymeres Anion ein Anion einer polymeren Carbon- oder Sulfonsäure.

Besonders bevorzugt als polymeres Anion ist das Anion der Polystyrolsulfonsäure (PSS).

Das Molekulargewicht der die Polyanionen liefernden Polysäuren beträgt vorzugsweise 1 000 bis 2 000 000, besonders bevorzugt 2 000 bis 500 000. Die Polysäuren oder ihre Alkalisalze sind im Handel erhältlich, z.B. Polystyrolsulfonsäuren und Polyacrylsäuren, oder aber nach bekannten Verfahren herstellbar (siehe z.B. Houben Weyl, Methoden der organischen Chemie, Bd. E 20 Makromolekulare Stoffe, Teil 2, (1987), S. 1141 u.f.).

Polymere(s) Anion(en) und elektrisch leitende Polymere können in der Dispersion A) insbesondere in einem Gewichtsverhältnis von 0,5:1 bis 50:1, bevorzugt von 1:1 bis 30:1, besonders bevorzugt 2:1 bis 20:1 enthalten sein. Das Gewicht der elektrisch leitenden Polymere entspricht hierbei der Einwaage der eingesetzten Monomere unter Annahme, dass bei der Polymerisation vollständiger Umsatz erfolgt.

Als monomere Anionen dienen beispielsweise solche von $C_1$-$C_{20}$-Alkansulfonsäuren, wie der Methan-, Ethan-, Propan-, Butan- oder höheren Sulfonsäuren wie der Dodecansulfonsäure, von aliphatischen Perfluorsulfonsäuren, wie der Trifluormethansulfonsäure, der Perfluorbutansulfonsäure oder der Perfluoroctansulfonsäure, von aliphatischen $C_1$-$C_{20}$-Carbonsäuren wie der 2-Ethylhexylcarbonsäure, von aliphatischen Perfluorcarbonsäuren, wie der Trifluoressigsäure oder der Perfluoroctansäure, und von aromatischen, gegebenenfalls durch $C_1$-$C_{20}$-Alkylgruppen substituierten Sulfonsäuren wie der Benzolsulfonsäure, o-Toluolsulfonsäure, p-Toluolsulfonsäure oder der Dodecylbenzolsulfonsäure und von Cycloalkansulfonsäuren wie Camphersulfonsäure oder Tetrafluoroborate, Hexafluorophosphate, Perchlorate, Hexafluoroantimonate, Hexafluoroarsenate oder Hexachloroantimonate.

Bevorzugt als monomere Anionen sind die Anionen der p-Toluolsulfonsäure, Methansulfonsäure oder Camphersulfonsäure.

Kationische Polythiophene, die zur Ladungskompensation Anionen als Gegenionen enthalten, werden in der Fachwelt auch oft als Polythiophen/(Poly-)Anion-Komplexe bezeichnet.

Die Dispersionen A) können ein oder mehrere Dispersionsmittel D) enthalten. Als Dispersionsmittel D) seien beispielsweise folgende Lösungsmittel genannt: aliphatische Alkohole wie Methanol, Ethanol, i-Propanol und Butanol; aliphatische Ketone wie Aceton und Methylethylketon; aliphatische Carbonsäureester wie Essigsäureethylester und Essigsäurebutylester; aromatische Kohlenwasserstoffe wie Toluol und Xylol; aliphatische Kohlenwasserstoffe wie Hexan, Heptan und Cyclohexan; Chlorkohlenwasserstoffe wie Dichlormethan und Dichlorethan; aliphatische Nitrile wie Acetonitril, aliphatische Sulfoxide und Sulfone wie Dimethylsulfoxid und Sulfolan; aliphatische Carbonsäureamide wie Methylacetamid, Dimethylacetamid und Dimethylformamid; aliphatische und araliphatische Ether wie Diethylether und

Anisol. Weiterhin kann auch Wasser oder ein Gemisch aus Wasser mit den vorgenannten organischen Lösungsmitteln als Dispersionsmittel D) verwendet werden.

Bevorzugte Dispersionsmittel D) sind Wasser oder andere protische Lösungsmittel wie Alkohole, z.B. Methanol, Ethanol, i-Propanol und Butanol, sowie Mischungen von Wasser mit diesen Alkoholen, besonders bevorzugtes Lösungsmittel ist Wasser.

Die Dispersion A) kann außerdem weitere Komponenten enthalten wie oberflächenaktive Substanzen, z.B. ionische und/oder nichtionische Tenside; Haftvermittler, wie z.B. organofunktionelle Silane bzw. deren Hydrolysate, z.B. 3-Glycidoxypropyltrialkoxysilan, 3-Aminopropyltriethoxysilan, 3-Mercaptopropyltrimethoxysilan, 3-Metacryloxypropyltrimethoxysilan, Vinyltrimethoxysilan oder Octyltriethoxysilan; Vernetzer wie Melaminverbindungen, verkappte Isocyanate, funktionelle Silane - z.B. Tetraethoxysilan, Alkoxysilanhydrolysate, z.B. auf Basis von Tetraethoxysilan, Epoxysilane wie 3-Glycidoxypropyltrialkoxysilan - Polyurethane, Polyacrylate oder Polyolefindispersionen, oder weitere Additive.

Bevorzugt enthalten die Dispersionen A) weitere Additive, die die Leitfähigkeit steigern, wie z.B. ethergruppenlaaltige Verbindungen, wie z.B. Tetrahydofuran; lactongruppenhaltige Verbindungen wie γ-Butyrolacton, γ-Valerolacton; amid- oder lactamgruppenhaltige Verbindungen wie Caprolactam, N-Methylcaprolactam, N,N-Dimethylacetamid, N-Methylacetamid, N,N-Dimethylformamid (DMF), N-Methylformamid, N-Methylformanilid, N-Methylpyrrolidon (NMP), N-Octylpyrrolidon, Pyrrolidon; Sulfone und Sulfoxide, wie z.B. Sulfolan (Tetramethylensulfön), Dimethylsulfoxid (DMSO); Zucker oder Zuckerderivate, wie z.B. Saccharose, Glucose, Fructose, Lactose, Zuckeralkohole, wie z.B. Sorbit, Mannit; Imide, wie z.B. Succinimid oder Maleimid; Furanderivate, wie z.B. 2- Furancarbonsäure, 3-Furancarbonsäure, und/oder Di- oder Polyalkohole, wie z.B. Ethylenglycol, Glycerin oder Di- bzw. Triethylenglycol. Besonders bevorzugt werden als leitfähigkeitserhöhende Additive Tetrahydrofuran, N-Methylformamid, N-Methylpyrrolidon, Ethylenglycol, Dimethylsulfoxid oder Sorbit eingesetzt. Die weiteren Additive können entweder jeweils alleine oder in jeder beliebigen Kombination davon in der Dispersion A) enthalten sein.

Die Dispersionen A) können außerdem ein oder mehrere Binder enthalten. Bevorzugt sind polymere, organische Binder wie beispielsweise Polyvinylalkohole, Polyvinylpyrrolidone, Polyvinylchloride, Polyvinylacetate, Polyvinylbutyrate, Polyacrylsäureester, Polyacrylsäureamide, Polymethacrylsäureester, Polymethacrylsäureamide, Polyacrylnitrile, Styrol/Acrylsäureester-, Vinylacetat/Acrylsäureester- und Ethylen/Vinylacetat-Copolymerisate, Polybutadiene, Polyisoprene, Polystyrole, Polyether, Polyester, Polycarbonate, Polyurethane, Polyamide, Polyimide, Polysulfone, Melamin-Formaldehyharze, Epoxidharze, Siliconharze oder Cellulosen in Frage. Weiterhin kommen bevorzugt als polymere organische Binder auch solche in Frage, die durch Zugabe von Vernetzern, wie beispielsweise Melaminverbindungen, verkappten Isocyanaten oder funktionellen Silanen, wie z.B. 3-Glycidoxypropyltrialkoxysilan, Tetraethoxysilan und Tetraethoxysilanhydrolysat, oder vernetzbaren Polymeren wie z.B. Polyurethanen, Polyacrylaten oder Polyolefinen und anschließende Vernetzung erzeugt werden. Solche als polymere Binder geeigneten Vernetzungsprodukte können auch beispielsweise durch Reaktion der zugegebenen Vernetzer mit gegebenenfalls in der Dispersion A) enthaltenen polymeren Anionen gebildet werden. Bevorzugt sind solche Binder, die eine ausreichende Temperaturstabilität aufweisen, um den Temperaturbelastungen zu widerstehen, denen die fertigen Kondensatoren später ausgesetzt werden, z.B. Löttemperaturen von 220 bis 260°C.

Der Feststoffgehalt des polymerem Binders in der Dispersion A) beträgt 0,1 - 90 Gew.-%, bevorzugt 0,5 - 30 Gew.-% und ganz besonders bevorzugt 0.5 - 10 Gew.-%.

Fig. 1 beschreibt eine schematische Darstellung des Aufbaus eines Feststoffelektrolytkondensators am Beispiel eines Tantalkondensators mit

1 Kondensatorkörper

5 gegebenenfalls vorhandene leitfähige Außenschicht

6 Graphit/Silberschicht

7 Drahtkontakt zum Elektrodenkörper 2

8 äußeren Kontakten

9 Verkapselung

10 Bildausschnitt

Fig. 2 beschreibt den vergrößerten Bildausschnitt 10 aus Fig. 2 der den schematischer Schichtaufbau des Tantalkondensators mit

10 Bildausschnitt
2 porösem Elektrodenkörper (Anode)
3 Dielektrikum
4 Feststoffelektrolyt (Kathode)
5 gegebenenfalls vorhandene leitfähige Außenschicht
6 Graphit/Silberschicht

wiedergibt.

Fig. 3 beschreibt eine schematische Darstellung des Aufbaus eines Feststoffelektrolytkondensators am Beispiel eines Aluminium Wickelkondensators mit

11 poröse Anodenfolie
12 Kontaktdraht für Anodenfolie
13 Kathodenfolie
14 Kontaktdraht für Kathodenfolie
15 Separator
16 Klebeband

Prinzipiell kann ein solcher erfindungsgemäßer Elektrolytkondensator folgendermaßen hergestellt werden: Zunächst wird z.B. ein Ventilmetall-Pulver mit einer hohen Oberfläche gepresst und zu einem porösen Elektrodenkörper gesintert. Hierbei wird üblicherweise ein elektrischer Kontaktdraht, bevorzugt aus einem Ventilmetall, wie z. B. Tantal, mit in den Elektrodenkörper eingepresst. Es können alternativ auch Metallfolien geätzt werden, um eine poröse Folie zu erhalten. Bei einem Wickelkondensator wird eine poröse Anodenfolie, die den Elektrodenkörper bildet, und eine Kathodenfolie durch einen Separator getrennt und aufgewickelt.

Der Elektrodenkörper wird dann beispielsweise durch elektrochemische Oxidation, mit einem Dielektrikum, d. h. einer Oxidschicht, überzogen. Auf den oxidierten Elektrodenkörper wird daraufhin erfindungsgemäß eine Dispersion A) enthaltend wenigstens Teilchen B) eines elektrisch leitfähigen Polymers, wie beispielsweise eines gegebenenfalls substituierten Polythiophens, und ein Dispersionsmittel D) aufgebracht und zur Bildung des Feststoffelektrolyten das Dispersionsmittel D) wenigstens teilweise entfernt wird. Gegebenenfalls werden weitere Schichten (in Fig. 1 und Fig. 2 mit leitfähiger Außenschicht (5) bezeichnet) auf die äußere Oberfläche des Kondensatorkörpers aufgebracht. Ein Überzug mit gut leitfähigen Schichten, wie Graphit und Silber, oder ein metallischer Kathodenkörper mit Separator, wie z.B. bei Aluminium-Wickelkondensatoren, dient als Elektrode zur Ableitung des Stroms. Schließlich wird der Kondensator gegebenenfalls kontaktiert und abschließend eingekapselt.

Bevorzugt werden oxidierte Elektrodenkörper in Form einer Folie eingesetzt, welche zusammen mit einem Separator und einer Kathodenfolie aufgewickelt (wie z.B. in Fig. 3 dargestellt) oder gestapelt werden. Der Separator besteht z.B. aus Cellulosefasern oder synthetischen Fasern, wie z.B. Polypropylen-, Polyester- oder Polyamid-Fasern. Bevorzugt sind Separatorpapiere enthaltend Cellulosefasern.

Weiterhin bevorzugt ist ein Verfahren zur Herstellung von Elektrolytkondensatoren, dadurch gekennzeichnet, dass es sich bei dem Elektrodenmaterial um ein Ventilmetall oder um eine Verbindung mit einem Ventilmetall vergleichbaren elektrischen Eigenschaften handelt.

Als Ventilmetall sind im Rahmen der Erfindung solche Metalle zu verstehen, deren Oxidschichten den Stromfluss nicht in beide Richtungen gleichermaßen ermöglichen: Bei anodisch angelegter Spannung sperren die Oxidschichten der Ventilmetalle den Stromfluss, während es bei kathodisch angelegter Spannung zu großen Strömen kommt, die die Oxidschicht zerstören können. Zu den Ventilmetallen zählen Be, Mg, Al, Ge, Si, Sn, Sb, Bi, Ti, Zr, Hf, V, Nb, Ta und W sowie eine Legierung oder Verbindung von wenigstens einem dieser Metalle mit anderen Elementen. Die bekanntesten Vertreter der Ventilmetalle sind Al, Ta, und Nb. Verbindungen mit einem Ventilmetall vergleichbaren elektrischen Eigenschaften sind solche mit metallischer Leitfähigkeit, welche oxidierbar sind und deren Oxidschichten die vorangehend beschriebenen Eigenschaften besitzen. Beispielsweise besitzt NbO metallische Leitfähigkeit, wird jedoch im Allgemeinen nicht als Ventilmetall betrachtet. Schichten von oxidiertem NbO weisen jedoch die typischen Eigenschaften von Ventilmetalloxidschichten auf, so dass NbO oder eine Legierung oder Verbindung von NbO mit anderen Elementen typische Beispiele für solche Verbindungen mit einem Ventilmetall vergleichbaren elektrischen Eigenschaften sind.

Bevorzugt sind Elektrodenmaterialien aus Tantal, Aluminium und solche Elektrodenmaterialien, die auf Niob oder Nioboxid basieren.

Besonders bevorzugt sind Elektrodenmaterialien aus Aluminium.

Unter Elektrodenmaterialien, die auf Niob oder Nioboxid basieren, werden solche Materialien verstanden, bei denen Niob oder Nioboxid die Komponente mit dem größten Stoffmengenanteil darstellen.

Bei dem Elektrodenmaterial, das auf Niob oder Nioboxid basiert, handelt es sich bevorzugt um Niob, NbO, ein

Nioboxid $NbO_x$, wobei x Werte von 0,8 bis 1,2 annehmen kann, Niobnitrid, Nioboxynitrid oder Mischungen dieser Materialien oder um eine Legierung oder Verbindung von wenigstens einem dieser Materialien mit anderen Elementen.

Bevorzugt als Legierungen sind Legierungen mit wenigstens einem Ventilmetall, wie beispielsweise Be, Mg, Al, Ge, Si, Sn, Sb, Bi, Ti, Zr, Hf, V, Nb, Ta oder W.

Demzufolge sind unter dem Begriff "oxidierbares Metall" nicht nur Metalle, sondern auch eine Legierung oder Verbindung eines Metalls mit anderen Elementen gemeint, sofern sie metallische Leitfähigkeit besitzen und oxidierbar sind.

Die oxidierbaren Metalle werden beispielsweise in Pulverform zu einem porösen Elektrodenkörper gesintert oder es wird einem metallischen Körper eine poröse Struktur aufgeprägt. Letzteres kann z.B. durch Ätzen einer Folie erfolgen.

Die porösen Elektrodenkörper werden beispielsweise in einem geeigneten Elektrolyten, wie z.B. Phosphorsäure oder einer wässrigen Lösung von Ammoniumadipat, durch Anlegen einer Spannung oxidiert. Die Höhe dieser Formierspannung ist abhängig von der zu erzielenden Oxidschichtdicke bzw. der späteren Anwendungsspannung des Kondensators. Bevorzugte Formierspannungen sind 1 bis 800 V, besonders bevorzugt 1 bis 300 V.

Bevorzugt werden zur Herstellung des Elektrodenkörpers Metallpulver mit einer spezifischen Ladung von 1000 bis 1 000000 $\mu$C/g, besonders bevorzugt mit einer spezifischen Ladung von 5000 bis 500000 $\mu$C/g, ganz besonders bevorzugt mit einer spezifischen Ladung von 5000 bis 300000 $\mu$C/g, überaus bevorzugt mit einer spezifischen Ladung von 10000 bis 200000 $\mu$C/g.

Die spezifische Ladung des Metallpulvers berechnet sich dabei wie folgt:

Spezifische Ladung des Metallpulvers= (Kapazität Anodisierspannung)/ Gewicht des oxidierten Elektrodenkörpers.

Die Kapazität ergibt sich dabei aus der Kapazität des oxidierten Elektrodenkörpers gemessen bei 120 Hz in einem wässrigen Elektrolyten. Die elektrische Leitfähigkeit des Elektrolyten ist dabei hinreichend groß, so dass es bei 120 Hz noch nicht zu einem Kapazitätsabfall aufgrund des elektrischen Widerstands des Elektrolyten kommt. Beispielsweise werden 18 %ige wässrige Schwefelsäure-Elektrolyte zur Messung eingesetzt.

Die eingesetzten Elektrodenkörper haben eine Porosität von 10 bis 90 %, bevorzugt von 30 bis 80 %, besonders bevorzugt von 50 bis 80 %.

Die porösen Elektrodenkörper haben einen mittleren Porendurchmesser von 10 bis 10000 nm, bevorzugt von 50 bis 5000 nm, besonders bevorzugt von 100 bis 3000 nm.

Besonders bevorzugt Gegenstand der vorliegenden Erfindung ist demgemäß ein Verfahren zur Herstellung von Elektrolytkondensatoren, dadurch gekennzeichnet, dass es sich bei dem Ventilmetall oder der Verbindung einem Ventilmetall vergleichbaren elektrischen Eigenschaften um Tantal, Niob, Aluminium, Titan, Zirkonium, Hafnium, Vanadium, eine Legierung oder Verbindung von wenigstens einem dieser Metalle mit anderen Elementen, NbO oder eine Legierung oder Verbindung von NbO mit anderen Elementen handelt.

Das Dielektrikum besteht bevorzugt aus einem Oxid des Elektrodenmaterials. Es enthält gegebenenfalls weitere Elemente und/oder Verbindungen.

Die Kapazität des Kondensators hängt neben der Art des Dielektrikums von der Oberfläche und der Dicke des Dielektrikums ab. Die spezifische Ladung ist ein Maß dafür, wie viel Ladung pro Gewichtseinheit der oxidierte Elektrodenkörper aufnehmen kann. Die spezifische Ladung berechnet sich wie folgt:

Spezifische Ladung des Kondensators = (Kapazität Nennspannung)/ Gewicht des oxidierten Elektrodenkörpers.

Die Kapazität ergibt sich dabei aus der Kapazität des fertigen Kondensators gemessen bei 120 Hz und die Nennspannung ist die spezifizierte Einsatzspannung des Kondensators (rated voltage). Das Gewicht des oxidierten Elektrodenkörpers bezieht sich auf das reine Gewicht des mit Dielektrikum überzogenen porösen Elektrodenmaterials ohne Polymer, Kontakte und Verkapselungen.

Bevorzugt weisen die nach dem neuen Verfahren hergestellten Elektrolytkondensatoren eine spezifische Ladung von 500 bis 500000 $\mu$C/g, besonders bevorzugt eine spezifische Ladung von 2500 bis 250000 $\mu$C/g, ganz besonders bevorzugt eine spezifische Ladung von 2500 bis 1500000 $\mu$C/g, überaus bevorzugt eine spezifische Ladung von 5000 bis 100000 $\mu$C/g auf.

Als Vorstufen für die Herstellung leitfähiger Polythiophene der Teilchen B) in der Dispersion A), im Folgenden

auch als Vorstufen bezeichnet, werden entsprechende Monomere oder deren Derivate verstanden. Es können auch Mischungen von unterschiedlichen Vorstufen verwendet werden. Geeignete monomere Vorstufen sind beispielsweise gegebenenfalls substituierte Thiophene, bevorzugt gegebenenfalls substituierte 3,4-Alkylendioxythiophene, 3,4-Alkylenoxythiathiophene oder Thieno[3,4-b]Thiophene.

Als gegebenenfalls substituierte 3,4-Alkylendioxythiophene, 3,4-Alkylenoxythiathiophene oder Thieno[3,4-b]thiophene seien beispielhaft die Verbindungen der allgemeinen Formel (III) oder der allgemeinen Formel (IV) oder der allgemeinen Formel (XI) oder einer Mischung aus Thiophenen der allgemeinen Formeln (III) und (IV) oder einer Mischung aus Thiophenen der allgemeinen Formel (III) und (XI), oder einer Mischung aus Thiophenen der allgemeinen Formel (IV) und (XI) oder einer Mischung aus Thiophenen der allgemeinen Formel (III), (IV) und (XI)

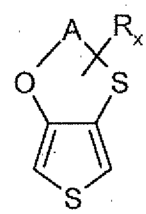
(III)

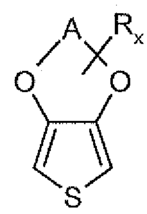
(IV)

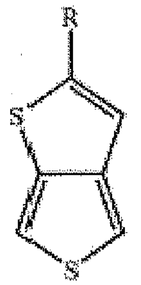
(XI)

aufgeführt,
worin

A für einen gegebenenfalls substituierten $C_1$-$C_5$-Alkylenrest, bevorzugt für einen gegebenenfalls substituierten $C_2$-$C_3$-Alkylenrest, steht,

R für einen linearen oder verzweigten, gegebenenfalls substituierten $C_1$-$C_{18}$-Alkylrest, bevorzugt linearen oder verzweigten, gegebenenfalls substituierten $C_1$-$C_{14}$-Alkylrest, einen gegebenenfalls substituierten $C_5$-$C_{12}$-CycLoalkylrest, einen gegebenenfalls substituierten $C_6$-$C_{14}$-Arylrest, einen gegebenenfalls substituierten $C_7$-$C_{18}$-Aralkylrest, einen gegebenenfalls substituierten $C_1$-$C_4$-Hydroxyalkylrest, bevorzugt gegebenenfalls substituierten $C_1$-$C_2$-Hydroxyalkylrest, oder einen Hydroxylrest steht,

x für eine ganze Zahl von 0 bis 8 steht, bevorzugt von 0 bis 6, besonders bevorzugt für 0 oder 1 steht und

für den Fall, dass mehrere Reste R an A gebunden sind, diese gleich oder unterschiedlich sein können.

Besonders bevorzugte monomere Vorstufen sind gegebenenfalls substituierte 3,4-Ethylendioxythiophene.

Als substituierte 3,4-Ethylendioxythiophene seien beispielhaft die Verbindungen der allgemeinen Formel (V) genannt,

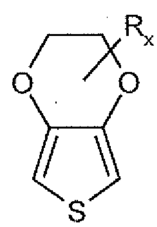
(V)

worin

R und x die für die allgemeine Formeln (III) und (IV) genannte Bedeutung haben.

Unter Derivaten dieser monomeren Vorstufen werden im Sinne der Erfindung beispielsweise Dimere oder Trimere dieser monomeren Vorstufen verstanden. Es sind auch höhermolekulare Derivate, d.h. Tetramere, Pentamere etc. der monomeren Vorstufen als Derivate möglich.

Als Derivate substituierter 3,4-Alkylendioxythiophene seien beispielhaft die Verbindungen der allgemeinen Formel (VI) genannt,

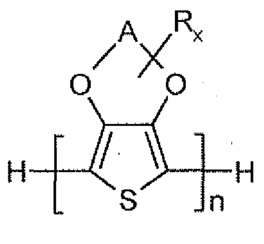

(VI)

worin

n für eine ganze Zahl von 2 bis 20, bevorzugt 2 bis 6, besonders bevorzugt für 2 oder 3 steht, und

A, R und x die für die allgemeine Formeln (III) und (IV) genannte Bedeutung haben.

Die Derivate können sowohl aus gleichen wie unterschiedlichen Monomereinheiten aufgebaut sein und in reiner Form sowie im Gemisch untereinander und/oder mit den monomeren Vorstufen eingesetzt werden. Auch oxidierte oder reduzierte Formen dieser Vorstufen sind im Sinne der Erfindung von dem Begriff "Vorstufen" umfasst, sofern bei ihrer Polymerisation die gleichen leitfähigen Polymeren entstehen wie bei den vorangehend aufgeführten Vorstufen.

Als Substituenten für die oben genannten Vorstufen, insbesondere für die Thiophene, bevorzugt für die 3,4-Alkylendioxythiophene kommen die für die allgemeine Formeln (III), (IV) oder (XI) für R genannten Reste in Frage.

Als gegebenenfalls weitere Substituenten der Reste A und/oder der Reste R kommen die im Zusammenhang mit den allgemeinen Formeln (I), (II) oder (X) genannten organischen Gruppen in Frage.

Verfahren zur Herstellung der monomeren Vorstufen für die Herstellung leitfähiger Polymere sowie deren Derivaten sind dem Fachmann bekannt und beispielsweise in L. Groenendaal, F. Jonas, D. Freitag, H. Pielartzik & J. R. Reynolds, Adv. Mater. 12 (2000) 481 - 494 und darin zitierter Literatur beschrieben.

Die für die Herstellung der zu verwendenden Polythiophene erforderlichen 3,4-Alkylenoxythiathiophene der Formel (III) sind dem Fachmann bekannt oder nach bekannten Verfahren herstellbar (beispielsweise gemäß P. Blanchard, A. Cappon, E. Levillain, Y. Nicolas, P. Frere und J. Roncali, Org. Lett. 4 (4), 2002, S. 607 - 609).

Die für die Herstellung der zu verwendenden Polythiophene erforderlichen Thieno[3,4-b]thiophene der Formel (XI) sind dem Fachmann bekannt oder nach bekannten Verfahren herstellbar (beispielsweise gemäß US2004/0074779A1).

Die Herstellung der Dispersionen erfolgt aus den oben beschriebenen Vorstufen beispielsweise analog zu den in EP-A 440 957 genannten Bedingungen. Eine verbesserte Variante für die Herstellung der Dispersionen stellt der Einsatz von Ionentauscher zur Entfernung des anorganischen Salzgehaltes oder eines Teils davon dar. Eine solche Variante ist beispielsweise in DE-A 19627071 beschrieben. Der Ionentauscher kann beispielsweise mit dem Produkt verrührt werden oder das Produkt wird über eine mit Ionenaustauschersäule gefüllt Säule gefördert. Durch die Verwendung des Ionenaustauschers können beispielsweise die oben beschriebenen niedrigen Metallgehalte erzielt werden.

Die Teilchengröße der Teilchen B) in der Dispersion A) kann beispielsweise mittels eines Hochdruckhomogenisators verringert werden. Dieser Vorgang kann auch wiederholt werden um den Effekt zu vergrößern. Besonders Drücke zwischen 100 und 2000 bar haben sich als vorteilhaft erwiesen, um die Teilchengröße stark zu reduzieren.

Auch eine Herstellung eines Polythiophen/Polyanion-Komplexes und anschließende Dispergierung oder Redispergierung in einem oder mehreren Lösungsmittel(n) ist möglich.

Die Teilchen B) des leitfähigen Polymers bilden bevorzugt eine stabile Dispersion. Es können jedoch auch instabile Dispersionen verwendet werden, in dem diese vor Gebrauch beispielsweise gerührt, gerollt oder aufgeschüttelt werden, um eine gleichmäßige Verteilung der Teilchen B) zu gewährleisten.

Die Dispersionen A) werden nach bekannten Verfahren, z.B. durch Spincoating, Tränkung, Gießen, Auftropfen, Spritzen, Aufsprühen, Aufrakeln, Bestreichen oder Bedrucken, beispielsweise Ink-jet-, Sieb- oder Tampondrucken, auf

das Dielektrikum des Elektrodenkörpers aufgebracht.

Das Eindringen der Dispersion in den porösen Elektrodenkörper kann beispielsweise durch Über- oder Unterdruck, Vibration, Ultraschall oder Wärme erleichtert werden.

Die Aufbringung kann direkt oder unter Verwendung eines Haftvermittlers, beispielsweise eines Silans, wie z.B. organofunktionelle Silane bzw. deren Hydrolysate, z.B. 3-Glycidoxypropyltrialkoxysilan, 3-Aminopropyltriethoxysilan, 3-Mercaptopropyltrimethoxysilan, 3-Metacryloxypropyltrimethoxysilan, Vinyltri-methoxysilan oder Octyltriethoxysilan, und/oder einer oder mehrerer anderer funktionellen Schichten auf das Dielektrikum des Elektrodenkörpers erfolgen.

Nach dem Aufbringen der Dispersion A) wird das Dispersionsmittel D) vorzugsweise entfernt, damit sich aus den Teilchen B) und gegebenenfalls weiteren Additiven in der Dispersion der Feststoffelektrolyt ausbilden kann. Es kann aber auch mindestens ein Teil des Dispersionsmittels D) im Feststoffelektrolyten verbleiben.

Das Entfernen des Dispersionsmittels D) nach dem Aufbringen der Dispersion kann durch einfaches Verdampfen bei Raumtemperatur erfolgen. Zur Erzielung höherer Verarbeitungsgeschwindigkeiten ist es jedoch vorteilhafter, die Dispersionsmittel D) bei erhöhten Temperaturen, z.B. bei Temperaturen von 20 bis zu 300°C, bevorzugt 40 bis zu 250°C, zu entfernen. Eine thermische Nachbehandlung kann unmittelbar mit dem Entfernen des Lösungsmittel verbunden oder aber auch in zeitlichem Abstand von der Fertigstellung der Beschichtung vorgenommen werden.

Die Dauer der Wärmebehandlung beträgt in Abhängigkeit von der Art des für die Beschichtung verwendeten Dispersion 5 Sekunden bis mehrere Stunden. Für die thermische Behandlung können auch Temperaturprofile mit unterschiedlichen Temperaturen und Verweilzeiten eingesetzt werden.

Die Wärmebehandlung kann z.B. in der Weise ausgeführt werden, dass man die beschichteten oxidierten Elektrodenkörper mit einer solchen Geschwindigkeit durch eine auf der gewünschten Temperatur befindliche Wärmekammer bewegt, dass die gewünschte Verweilzeit bei der gewählten Temperatur erreicht wird, oder mit einer auf der gewünschten Temperatur befindlichen Heizplatte für die gewünschte Verweilzeit in Kontakt bringt. Des Weiteren kann die Wärmebehandlung beispielsweise in einem Wärmeofen oder mehreren Wärmeöfen mit jeweils unterschiedlichen Temperaturen erfolgen.

Je nach Art des oxidierten Elektrodenkörpers kann es vorteilhaft sein, den oxidierten Elektrodenkörper weitere Male mit den Dispersionen zu imprägnieren, um dickere Polymerschichten und/oder eine größere Bedeckung der Dielektrikumsoberfläche zu erzielen.

Bevorzugt erfolgt das Aufbringen der Dispersion A) und das wenigstens teilweise Entfernen des Dispersionsmittels D) mehrfach.

Die Bedeckung des Dielektrikums mit dem Feststoffelektrolyten kann folgendermaßen bestimmt werden: Die Kapazität des Kondensators wird im trockenen und feuchten Zustand bei 120 Hz gemessen. Der Bedeckungsgrad ist das Verhältnis der Kapazität im trockenen Zustand zu der Kapazität im feuchten Zustand ausgedrückt in Prozent. Trockener Zustand bedeutet, dass der Kondensator über mehrere Stunden bei erhöhter Temperatur (80-120°C) getrocknet wurde, bevor er vermessen wird. Feuchter Zustand bedeutet, dass der Kondensator über mehrere Stunden einer gesättigten Luftfeuchte bei erhöhtem Druck, beispielsweise in einem Dampfdruckkessel, ausgesetzt wird. Die Feuchtigkeit dringt dabei in Poren ein, die vom Feststoffelektrolylen nicht bedeckt sind, und wirkt dort als Flüssigelektrolyt.

Die Bedeckung des Dielektrikums durch den Feststoffelektrolyten ist vorzugsweise größer als 50 %, besonders bevorzugt größer als 70 %, ganz besonders bevorzugt größer als 80 %.

Nach Herstellung des Feststoffelektrolyten können auf dem Kondensatorkörper weitere leitfähige Schichten, wie z.B. eine leitfähige Außenschicht aufgebracht werden. Bevorzugt wird eine polymere Außenschicht, beispielsweise wie in der europäischen Patentanmeldung EP-A 1 524 678 beschrieben, aufgebracht. Weitere gut leitfähige Schichten wie beispielsweise Graphit- und/oder Silberschichten dienen als Stromkollektor. Bei Wickelkondensatoren dient eine Kathodenfolie, die von dem Kondensatorkörper (Anodenfolie) durch einen Separator getrennt ist, als Stromkollektor. Abschließend wird der Kondensator gegebenenfalls kontaktiert und abschließend verkapselt.

Weiterhin Gegenstand der vorliegenden Erfindung ist eine Dispersion enthaltend wenigstens Teilchen enthaltend ein elektrisch leitfähiges Polythiophen, das gegebenenfalls substituiert ist, und ein Dispersionsmittel, dadurch gekennzeichnet, dass der pH-Wert der Dispersion gemessen bei 25°C größer gleich 1.8 und kleiner gleich 3.9 ist, bevorzugt größer gleich 2 und kleiner gleich 3.5, besonders bevorzugt größer gleich 2 und kleiner gleich 3, überaus bevorzugt größer gleich 2 und kleiner gleich 2,8, und dass die Teilchen enthaltend ein Polythiophen im trockenen Zustand eine spezifische elektrische Leitfähigkeit größer als 100 S/cm besitzen.

Für die Dispersion gelten die gleichen Vorzugsbereiche wie die oben aufgeführten Vorzugsbereiche für die Dispersion A) aus dem erfindungsgemäßen Verfahren.

Das erfindungsgemäße Verfahren und die erfindungsgemäße Dispersion ermöglichen somit die Herstellung von Feststoffelektrolytkondensatoren mit niedrigem Äquivalenten Serienwiderstand (ESR), bei denen keine in-situ Polymerisation erforderlich ist. Somit stellen die Elektrolytkondensatoren hergestellt mit dem erfindungsgemäßen Verfahren einen weiteren Gegenstand der vorliegenden Erfindung dar.

Die erfindungsgemäß hergestellten Elektrolytkondensatoren eignen sich aufgrund ihres niedrigen ESR hervorragend zur Verwendung als Bauteil in elektronischen Schaltungen, beispielsweise als Glättungskondensator (filter

capacitor) oder Entstörkondensator (decoupling capacitor). Die Verwendung ist auch Gegenstand der Erfindung. Bevorzugt sind elektronische Schaltungen, wie sie sich beispielsweise in Computern (Desktop, Laptop, Server), in Computerperipheriegeräten (z.B. PC Karten), in tragbaren elektronischen Geräten, wie z.B. Mobiltelefonen, Digitalkameras oder Unterhaltungselektronik, in Geräten der Unterhaltungselektronik, wie z.B. in CD/DVD Spielern und Computerspielkonsolen, in Navigationssystemen, in Telekommunikationseinrichtungen, in Haushaltsgeräten, in Spannungsversorgungen oder in der Automobilelektronik befinden.

Die folgenden Beispiele dienen der beispielhaften Erläuterung der Erfindung und sind nicht als Beschränkung aufzufassen.

## Beispiele

### Beispiel 1:

In einem 2 1 Dreihalskolben mit Rührer und Innenthermometer wurden 868 g entionisiertes Wasser, 330 g einer wässrigen Polystyrolsulfonsäurelösung mit einem mittleren Molekulargewicht von 70000 und einem Feststoffgehalt von 3,8 Gew.-% vorgelegt. Die Reaktionstemperatur wurde zwischen 20 und 25°C gehalten. Unter Rühren wurden 5,1 g 3,4-Ethylendioxythiophen zugegeben. Die Lösung wurde 30 Minuten (min) gerührt. Anschließend wurden 0,03 g Eisen(III)-sulfat und 9,5 g Natriumpersulfat zugegeben und die Lösung weitere 24 Stunden (h) gerührt.

Nach Abschluss der Reaktion wurden zur Entfernung anorganischer Salze 100 ml eines stark sauren Kationenaustauschers und 250 ml eines schwach basischen Anionenaustauschers zugegeben und die Lösung weitere 2 h gerührt. Der Ionenauschtauscher wurde abfiltriert. Die Poly(3,4-ethylendioxythiophen)/Polystyrolsulfonat-Dispersion wurde zehnmal bei einem Druck von 700 bar mit einem Hochdruckhomogenisator homogenisiert. Anschließend wurde die Dispersion auf einen Feststoffgehalt von 2 % aufkonzentriert und dann zusätzlich noch fünf Male bei einem Druck von 1500 bar homogenisiert.

700 g der so hergestellten Dispersion wurden 28 g Dimethylsufoxid (DMSO) zugesetzt und zu einer Dispersion A)-1 verrührt.

Der pH-Wert der Dispersion A)-1 betrug bei 25°C 1.6.

Die Dispersion A)-1 wurde mittels Ammoniakwasser auf einen pH Wert von 2 eingestellt. Die Viskosität der so hergestellten Dispersion A)-2 betrug 34 mPa*s bei einer Scherrate von 100 Hz und 20°C.

Die Dispersion A)-2 wies folgende Teilchengrößenverteilung auf:

| | |
|---|---|
| $d_{10}$ | 21 nm |
| $d_{50}$ | 28 nm |
| $d_{90}$ | 50 nm |

Der Durchmesser der Teilchen B) des leitfähigen Polymers bezieht sich auf eine Massenverteilung der Teilchen B) in der Dispersion in Abhängigkeit vom Teilchendurchmesser. Die Bestimmung erfolgte über eine Ultrazentrifugenmessung. Die Teilchengröße wurde im gequollenen Zustand der Teilchen bestimmt.

Eine ICP-Analyse der Metallgehalte der Dispersion A)-2 ergab folgende Werte:

| | |
|---|---|
| Natrium (Na): | 110 mg/kg |
| Magnesium (Mg): | 0,8 mg/kg |
| Aluminium (Al): | 1,2 mg/kg |
| Silicium (Si): | 1,5 mg/kg |
| Phosphor (P): | 4,5 mg/kg |
| Kalium (K): | 0,7 mg/kg |
| Calcium (Ca): | 4,3 mg/kg |
| Chrom (C): | 0,20 mg/kg |
| Eisen (Fe): | 0,85 mg/kg |
| Zink (Zn): | <0,01 mg/kg |

### Beispiel 2:

Ein Teil der Dispersion A)-2 aus Beispiel 1 wurde auf einen Glasobjektträger (26 mm*26 mg*1 mm) mittels eines Spincoaters (Chemat Technology KW-4A) bei 1000 U/min für 5 Sekunden aufgeschleudert. Die Probe wurde 10 min bei 120°C getrocknet. Anschließend wurden zwei gegenüberliegende Kanten des Objektträgers mit Leitsilber beschichtet. Nach Trocknung des Leitsilbers wurden die beiden Silberstreifen kontaktiert und mit einem Keithley 199 Multimeter der Oberflächenwiderstand ermittelt. Die Schichtdicke wurde mit einem Tencor Alpha Step 500 Surface Profiler bestimmt. Aus Oberflächenwiderstand und Schichtdicke d wurde die spezifische Leitfähigkeit σ nach $\sigma = 1/(R_{\square} * d)$ ermittelt. Die Schichtdicke betrug 150 nm und die spezifische Leitfähigkeit 410 S/cm.

**Beispiel 3:**

3.1. Herstellung von oxidierten Elektrodenkörpern:

Eine poröse, auf 92 V formierte Aluminiumfolie mit den Abmessungen 170 mm 5mm (Anodenfolie) und eine poröse Aluminiumfolie mit den Abmessungen 200 mm 5mm (Kathodenfolie) wurden jeweils mit einem Kontaktdraht versehen, anschließend zusammen mit zwei Cellulose-Separatorpapieren wie in Fig. 3 dargestellt aufgewickelt und mit einem Klebeband fixiert. 10 dieser oxidierten Elektrodenkörper wurden hergestellt. Das Separatorpapier der oxidierten Elektrodenkörper wurden anschließend in einem Ofen bei 300°C carbonisiert.

3.2 Herstellung des Feststoffelektrolyten

Der pH-Wert der Dispersion A)-1 (aus Beispiel 1) wurde durch Zugabe von Ammoniakwasser auf einen Wert von 1.8 bei 25°C eingestellt. Die oxidierten Elektrodenkörper wurden in dieser so erhaltenen Dispersion 15 min getränkt. Danach erfolgte eine Trocknung bei 150°C für 40 min. Tränkung und Trocknung wurden zwei weitere Male durchgeführt.

Die mittleren elektrischen Werte der auf die vorangehende Weise gefertigten 10 Kondensatoren befinden sich in Tabelle 1. Die Kapazität (in Mikrofarad) wurde bei 120 Hz und der äquivalente Serienwiderstand (ESR) (in Milliohm) bei 100 kHz mittels eines LCR Meters (Agilent 4284A) bestimmt.

**Beispiel 4:**

10 Kondensatoren wurden analog zum Beispiel 3 gefertigt und vermessen, jedoch wurde die Dispersion A)-2 (pH=2) aus Beispiel 1 zur Bildung des Feststoffelektrolyten verwendet. Die mittleren elektrischen Werte der so gefertigten 10 Kondensatoren befinden sich in Tabelle 1.

**Beispiel 5:**

10 Kondensatoren wurde analog zum Beispiel 3 gefertigt und vermessen, jedoch wurde der pH-Wert der Dispersion A)-1 (aus Beispiel 1) Durch Zugabe von Dimethylethanolamin auf einen Wert von 2.5 eingestellt. Die mittleren elektrischen Werte der so gefertigten 10 Kondensatoren befinden sich in Tabelle 1.

**Beispiel 6:**

10 Kondensatoren wurden analog zum Beispiel 3 gefertigt und vermessen, jedoch wurde der pH-Wert der Dispersion A)-1 (aus Beispiel 1) durch Zugabe von Ammoniakwasser auf einen Wert von 3 eingestellt. Die mittleren elektrischen Werte der so gefertigten 10 Kondensatoren befinden sich in Tabelle 1.

**Beispiel 7:**

10 Kondensatoren wurden analog zum Beispiel 3 gefertigt und vermessen, jedoch wurde der pH-Wert der Dispersion A)-1 (aus Beispiel 1) durch Zugabe von Ammoniakwasser auf einen Wert von 3.5 eingestellt. Die mittleren elektrischen Werte der so gefertigten 10 Kondensatoren befinden sich in Tabelle 1.

**Vergleichsbeispiel 1:**

10 Kondensatoren wurden analog zum Beispiel 3 gefertigt und vermessen, jedoch wurde der pH-Wert der Dispersion A)-1 (aus Beispiel 1) nicht durch Zugabe von Ammoniakwasser erhöht, sondern auf dem ursprünglichen Wert von 1.6 belassen. Die mittleren elektrischen Werte der so gefertigten 10 Kondensatoren befinden sich in Tabelle 1.

**Vergleichsbeispiel 2 :**

10 Kondensatoren wurden analog zum Beispiel 3 gefertigt und vermessen, jedoch wurde der pH-Wert der Dispersion A)-1 (aus Beispiel 1) durch Zugabe von Ammoniakwasser auf einen Wert von 4 eingestellt. Die mittleren

elektrischen Werte der so gefertigten 10 Kondensatoren befinden sich in Tabelle 1.

**Vergleichsbeispiel 3 :**

10 Kondensatoren wurden analog zum Beispiel 3 gefertigt und vermessen, jedoch wurde der pH-Wert der Dispersion A)-1 (aus'Beispiel 1) durch Zugabe von Ammoniakwasser auf eine Wert von 5 eingestellt. Die mittleren elektrischen Werte der so gefertigten 10 Kondensatoren befinden sich in Tabelle 1.

**Vergleichsbeispiel 4 :**

10 Kondensatoren wurden analog zum Beispiel 3 gefertigt und vermessen, jedoch wurde der pH-Wert der Dispersion A)-1 (aus Beispiel 1) durch Zugabe von Ammoniakwasser auf einen Wert von 7 eingestellt. Die mittleren elektrischen Werte der so gefertigten 10 Kondensatoren befinden sich in Tabelle 1.

**Vergleichsbeispiel 5:**

10 Kondensatoren wurden analog zum Beispiel 3 gefertigt und vermessen, jedoch wurde der pH-Wert der Dispersion A)-1 (aus Beispiel 1) durch Zugabe von Ammoniakwasser auf einen Wert von 10 eingestellt. Die mittleren elektrischen Werte der so gefertigten 10 Kondensatoren befinden sich in Tabelle 1.

Tabelle 1

| | pH-Wert | Kapazität [$\mu$F] | ESR [m$\Omega$] |
|---|---|---|---|
| Beispiel 3 | 1.8 | 80 | 20 |
| Beispiel 4 | 2 | 90 | 13 |
| Beispiel 5 | 2.5 | 90 | 13 |
| Beispiel 6 | 3 | 85 | 12 |
| Beispiel 7 | 3.5 | 82 | 19 |
| Vergleichsbeispiel 1 | 1.6 | 68 | 141 |
| Vergleichsbeispiel 2 | 4 | 70 | 27 |
| Vergleichsbeispiel 3 | 5 | 71 | 26 |
| Vergleichsbeispiel 4 | 7 | 74 | 26 |
| Vergleichsbeispiel 5 | 10 | 70 | 32 |

Die erfindungsgemäß hergestellten Kondensatoren aus den Beispielen 3 bis 7 weisen deutlich niedrigere ESR Werte und höhere Kapazitätswerte als die Kondensatoren aus den Vergleichsbeispielen 1 bis 5 auf. Mittels Dispersionen mit einem pH-Wert von 1.8 bis 3.9 lassen sich demnach leistungsstärkere Feststoffelektrolytkondensatoren herstellen als mit solchen Dispersionen, deren pH-Wert kleiner 1.8 oder größer 3.9 ist.

**Patentansprüche**

**1.** Verfahren zur Herstellung eines Elektrolytkondensators, wenigstens umfassend, dass

a) auf einen porösen Körper, wenigstens umfassend
einen porösen Elektrodenkörper (2) eines Elektrodenmaterials und ein Dielektrikum (3), das die Oberfläche dieses Elektrodenmaterials bedeckt,

eine Dispersion A) aufgebracht wird,
die wenigstens Teilchen B) eines elektrisch leitfähigen Polymers und ein Dispersionsmittel D) enthält,

b) und zur Bildung eines Feststoffelektrolyten (4), der die Dielektrikumsoberfläche ganz oder teilweise bedeckt, das Dispersionmittel D) wenigstens teilweise entfernt wird,

**dadurch gekennzeichnet, dass** der pH-Wert der Dispersion A) gemessen bei 25°C größer gleich 1.8 und kleiner gleich 3.9 ist.

2. Verfahren gemäß Anspruch 1, **dadurch gekennzeichnet, dass** die Teilchen B) der Dispersion A) im trockenen Zustand eine spezifische elektrische Leitfähigkeit größer als 100 S/cm besitzen.

3. Verfahren gemäß wenigstens einem der Ansprüche 1 bis 2, **dadurch gekennzeichnet, dass** die Teilchen B) des leitfähigen Polymers in der Dispersion A) einen mittleren Durchmesser von 1-100 nm haben.

4. Verfahren gemäß wenigstens einem der Ansprüche 1 bis 3, **dadurch gekennzeichnet, dass** die Dispersion A) einen Gehalt an Metallen kleiner 5000 mg/kg besitzt.

5. Verfahren gemäß wenigstens einem der Ansprüche 1 bis 4, **dadurch gekennzeichnet, dass** die Teilchen B) in der Dispersion A) wenigstens ein Polythiophen mit wiederkehrenden Einheiten der allgemeinen Formel (I) oder der allgemeinen Formel (II) oder der allgemeinen Formel (X) oder wiederkehrenden Einheiten der Formeln (I) und (II) oder wiederkehrenden Einheiten der Formeln (I) und (X) oder wiederkehrenden Einheiten der Formeln (II) und (X) oder wiederkehrenden Einheiten der Formeln (I), (II) und (X) enthalten,

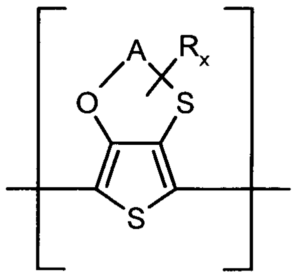

(I),

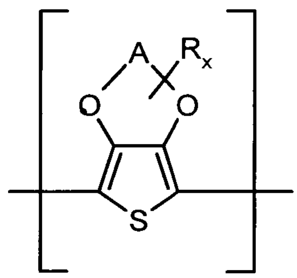

(II)

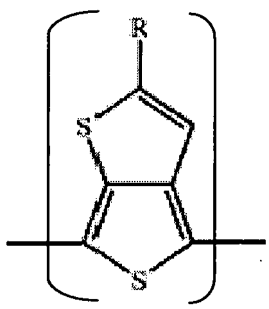

(X)

worin

A für einen gegebenenfalls substituierten $C_1$-$C_5$-Alkylenrest steht,
R unabhängig voneinander für H, einen linearen oder verzweigten, gegebenenfalls substituierten $C_1$-$C_{18}$-Alkylrest, einen gegebenenfalls substituierten $C_5$-$C_{12}$-Cycloalkylrest, einen gegebenenfalls substituierten $C_6$-$C_{14}$-Arylrest, einen gegebenenfalls substituierten $C_7$-$C_{18}$-Aralkylrest, einen gegebenenfalls substituierten $C_1$-$C_4$-Hydroxyalkylrest oder einen Hydroxylrest steht,
x für eine ganze Zahl von 0 bis 8 steht und

für den Fall, dass mehrere Reste R an A gebunden sind, diese gleich oder unterschiedlich sein können.

6. Verfahren gemäß wenigstens einem der Ansprüche 1 bis 5, **dadurch gekennzeichnet, dass** das leitfähige Polymer in der Dispersion A) ein gegebenenfalls substituiertes Poly (3,4-ethylendioxythiophen) ist.

7. Verfahren gemäß wenigstens einem der Ansprüche 1 bis 6, **dadurch gekennzeichnet, dass** die Teilchen B) zusätzlich wenigstens ein polymeres Anion enthalten.

8. Verfahren gemäß Anspruch 7, **dadurch gekennzeichnet, dass** das polymere Anion ein Anion einer polymeren Carbon- oder Sulfonsäure ist.

9. Verfahren gemäß wenigstens einem der Ansprüche 1 bis 8, **dadurch gekennzeichnet, dass** die Dispersion A) als Dispersionsmittel D) organische Lösungsmittel, Wasser oder Mischungen aus organischem Lösungsmittel und Wasser enthält.

10. Verfahren gemäß wenigstens einem der Ansprüche 1 bis 9, **dadurch gekennzeichnet, dass** die Dispersion A) zusätzlich Vernetzer und/oder oberflächenaktive Substanzen und/oder weitere Additive enthält.

11. Verfahren gemäß wenigstens einem der Ansprüche 1 bis 10, **dadurch gekennzeichnet, dass** es sich bei dem Elektrodenmaterial des Elektrodenkörpers (2) um ein Ventilmetall oder eine Verbindung mit einem Ventilmetall vergleichbaren elektrischen Eigenschaften handelt.

12. Elektrolytkondensator hergestellt mit einem Verfahren gemäß wenigstens einem der Ansprüche 1 bis 11.

13. Verwendung von Elektrolytkondensatoren gemäß Anspruch 12 in elektronischen Schaltungen.

14. Elektronische Schaltung enthaltend einen Elektrolytkondensator gemäß Anspruch 12.

## Claims

1. Process for producing an electrolytic capacitor, comprising at least

   a) applying a dispersion A)
   which contains at least particles B) of an electrically conductive polymer and a dispersion medium D)
   to a porous body comprising at least
   a porous electrode body (2) composed of an electrode material and a dielectric (3) which covers the surface of this electrode material
   b) and at least partially removing the dispersion medium D) in order to form a solid electrolyte (4) which entirely or partly covers the dielectric surface,

   **characterized in that** the pH of the dispersion A) measured at 25°C is greater than or equal to 1.8 and less than or equal to 3.9.

2. Process according to Claim 1, **characterized in that** the particles B) of the dispersion A) in the dry state have a specific electric conductivity of greater than 100 S/cm.

3. Process according to at least one of Claims 1 and 2, **characterized in that** the particles B) of the conductive polymer in the dispersion A) have an average diameter of 1-100 nm.

4. Process according to at least one of Claims 1 to 3, **characterized in that** the dispersion A) has a content of metals of less than 5000 mg/kg.

5. Process according to at least one of Claims 1 to 4, **characterized in that** the particles B) in the dispersion A) contain at least one polythiophene having repeating units of the general formula (I) or of the general formula (II) or of the general formula (X) or repeating units of the formulae (I) and (II) or repeating units of the formulae (I) and (X) or repeating units of the formulae (II) and (X) or repeating units of the formulae (I), (II) and (X),

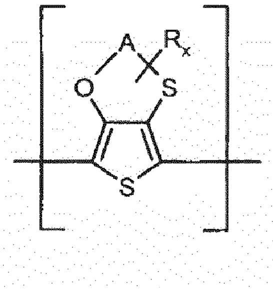
(I),

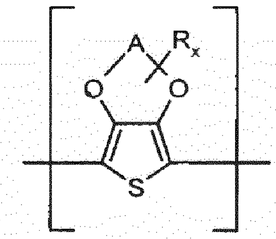
(II)

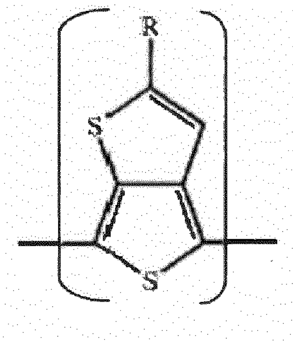
(X)

where

A is an optionally substituted $C_1$-$C_5$-alkylene radical,
R is independently at each occurrence H, a linear or branched, optionally substituted $C_1$-$C_{18}$-alkyl radical, an optionally substituted $C_5$-$C_{12}$-cycloalkyl radical, an optionally substituted $C_6$-$C_{14}$-aryl radical, an optionally substituted $C_7$-$C_{18}$-aralkyl radical, an optionally substituted $C_1$-$C_4$-hydroxyalkyl radical or a hydroxyl radical,
x is an integer from 0 to 8 and,

when a plurality of radicals R are bound to A, these can be identical or different.

6. Process according to at least one of Claims 1 to 5, **characterized in that** the conductive polymer in the dispersion A) is an optionally substituted poly(3,4-ethylenedioxythiophene).

7. Process according to at least one of Claims 1 to 6, **characterized in that** the particles B) additionally contain at least one polymeric anion.

8. Process according to Claim 7, **characterized in that** the polymeric anion is an anion of a polymeric carboxylic or sulphonic acid.

9. Process according to at least one of Claims 1 to 8, **characterized in that** the dispersion A) contains organic solvents, water or mixtures of organic solvents and water as dispersion medium D).

10. Process according to at least one of Claims 1 to 9, **characterized in that** the dispersion A) additionally contains crosslinkers and/or surface-active substances and/or further additives.

11. Process according to at least one of Claims 1 to 10, **characterized in that** the electrode material of the electrode body (2) is a valve metal or a compound having electrical properties comparable to a valve metal.

12. Electrolytic capacitor produced by a process according to at least one of Claims 1 to 11.

13. Use of electrolytic capacitors according to Claim 12 in electronic circuits.

14. Electronic circuit containing an electrolytic capacitor according to Claim 12.

## Revendications

1. Procédé de fabrication d'un condensateur électrolytique, comprenant au moins les étapes suivantes :

    a) sur un corps poreux, comprenant au moins
    un corps d'électrode poreux (2) d'un matériau d'électrode et un diélectrique (3), qui recouvre la surface de ce matériau d'électrode,

    une dispersion A) est appliquée,
    qui contient au moins des particules B) d'un polymère électriquement conducteur et un dispersant D),

    b) et pour la formation d'un électrolyte solide (4), qui recouvre en totalité ou en partie la surface du diélectrique, le dispersant D) est au moins partiellement éliminé,

    **caractérisé en ce que** le pH de la dispersion A) mesuré à 25 °C est supérieur ou égal à 1,8 et inférieur ou égal à 3,9.

2. Procédé selon la revendication 1, **caractérisé en ce que** les particules B) de la dispersion A) présentent à l'état sec une conductivité électrique spécifique supérieure à 100 S/cm.

3. Procédé selon au moins l'une quelconque des revendications 1 à 2, **caractérisé en ce que** les particules B) du polymère conducteur dans la dispersion A) ont un diamètre moyen de 1 à 100 nm.

4. Procédé selon au moins l'une quelconque des revendications 1 à 3, **caractérisé en ce que** la dispersion A) présente une teneur en métaux inférieure à 5 000 mg/kg.

5. Procédé selon au moins l'une quelconque des revendications 1 à 4, **caractérisé en ce que** les particules B) dans la dispersion A) contiennent au moins un polythiophène contenant des unités de répétition de formule générale (I) ou de formule générale (II) ou de formule générale (X) ou des unités de répétition des formules (I) et (II) ou des unités de répétition des formules (I) et (X) ou des unités de répétition des formules (II) et (X) ou des unités de répétition des formules (I), (II) et (X),

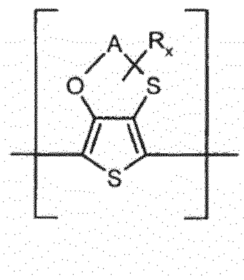
(I),

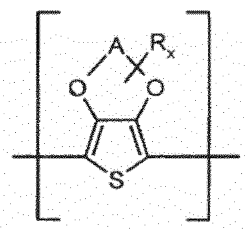
(II)

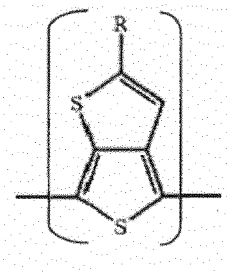
(X)

    dans lesquelles

    A représente un radical alkylène en $C_1$-$C_5$ éventuellement substitué,
    les R représentent indépendamment les uns des autres H, un radial alkyle en $C_1$-$C_{18}$ linéaire ou ramifié, éventuellement substitué, un radical cycloalkyle en $C_5$-$C_{12}$ éventuellement substitué, un radical aryle en $C_6$-$C_{14}$ éventuellement substitué, un radical aralkyle en $C_7$-$C_{18}$ éventuellement substitué, un radical hydroxyalkyle en $C_1$-$C_4$ éventuellement substitué ou un radical hydroxyle,

x représente un nombre entier de 0 à 8, et

lorsque plusieurs radicaux R sont reliés à A, ceux-ci peuvent être identiques ou différents.

6. Procédé selon au moins l'une quelconque des revendications 1 à 5, **caractérisé en ce que** le polymère conducteur dans la dispersion A) est un poly(3,4-éthylène-dioxythiophène) éventuellement substitué.

7. Procédé selon au moins l'une quelconque des revendications 1 à 6, **caractérisé en ce que** les particules B) contiennent en outre au moins un anion polymère.

8. Procédé selon la revendication 7, **caractérisé en ce que** l'anion polymère est un anion d'un acide carboxylique ou sulfonique polymère.

9. Procédé selon au moins l'une quelconque des revendications 1 à 8, **caractérisé en ce que** la dispersion A) contient en tant que dispersant D) des solvants organiques, de l'eau ou des mélanges d'un solvant organique et d'eau.

10. Procédé selon au moins l'une quelconque des revendications 1 à 9, **caractérisé en ce que** la dispersion A) contient en outre des agents de réticulation et/ou des substances tensioactives et/ou des additifs supplémentaires.

11. Procédé selon au moins l'une quelconque des revendications 1 à 10, **caractérisé en ce que** le matériau d'électrode du corps d'électrode (2) est un métal à effet de valve ou un composé contenant un métal à effet de valve ayant des propriétés électriques comparables.

12. Condensateur électrolytique fabriqué par un procédé selon au moins l'une quelconque des revendications 1 à 11.

13. Utilisation de condensateurs électrolytiques selon la revendication 12 dans des circuits électroniques.

14. Circuit électronique contenant un condensateur électrolytique selon la revendication 12.

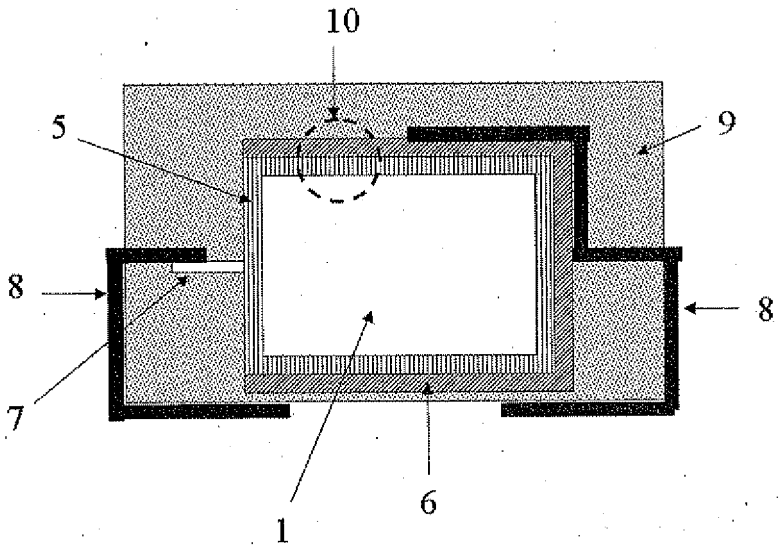


Fig. 1

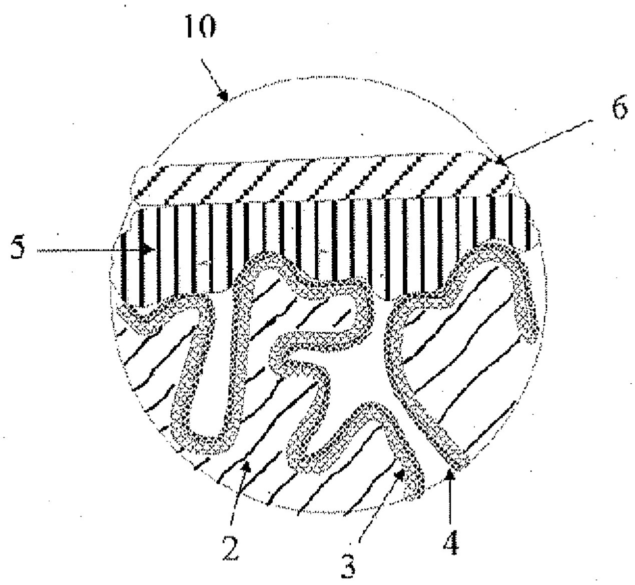


Fig. 2

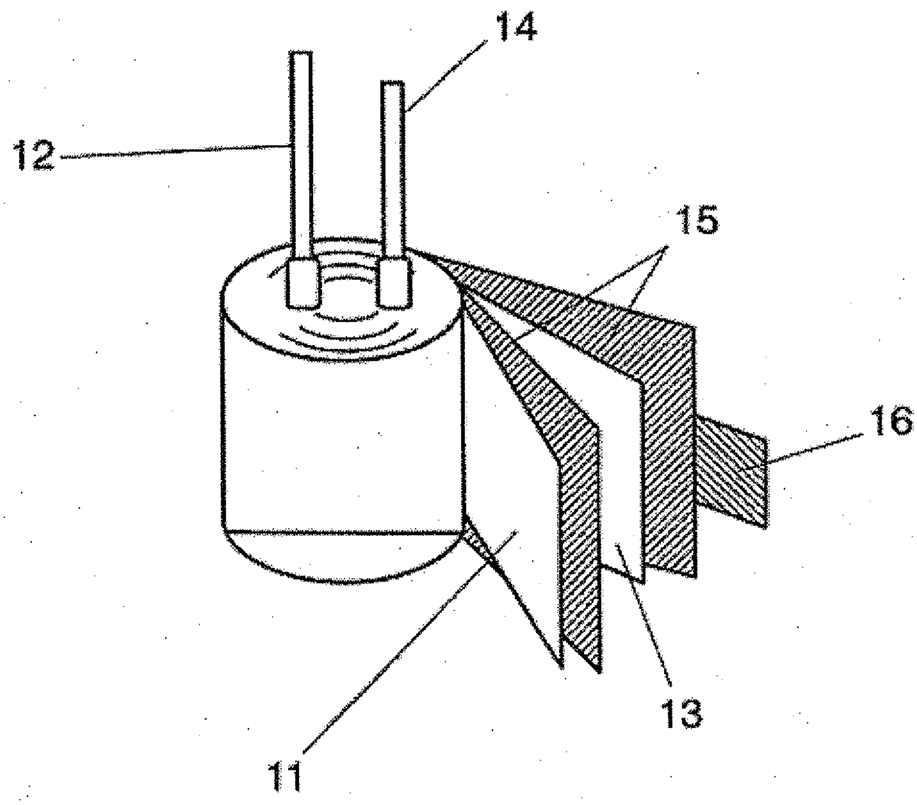


Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 340512 B
- JP 2006287182 B
- WO 2007031206 A1
- EP 1746613 A
- EP 1713103 A
- JP 2003229330 A
- EP 1988128 A1
- WO 2005034261 A1
- US 2005124784 A1
- WO 2005090434 A1
- US 2008086859 A1
- WO 2007052852 A1
- US 2004254297 A1
- US 2007069184 A1
- US 20040074779 A1
- EP 440957 A
- DE 19627071 A
- EP 1524678 A


### In der Beschreibung aufgeführte Nicht-Patentliteratur


- *Colloid Polym. Sci.,* 1989, vol. 267, 1113-1116
- **HOUBEN WEYL.** *Methoden der organischen Chemie, Bd. E 20 Makromolekulare Stoffe, Teil 2,* 1987, vol. E 20, 1141
- **L. GROENENDAAL ; F. JONAS ; D. FREITAG ; H. PIELARTZIK ; J. R. REYNOLDS.** *Adv. Mater.,* 2000, vol. 12, 481-494
- **P. BLANCHARD ; A. CAPPON ; E. LEVILLAIN ; Y. NICOLAS ; P. FRERE.** *J. Roncali, Org. Lett.,* 2002, vol. 4 (4), 607-609